# EUROPEAN PATENT APPLICATION

(11) **EP 4 797 569 A1**
(43) Date of publication of application: **26.08.2026**
(21) Application number: 24883947.4
(22) Date of filing: 19.06.2024
(51) Int. Cl.: H04B 10/071

(54) **OPTICAL MODULE, NETWORK DEVICE, COMMUNICATION SYSTEM AND CO-CABLE DETECTION METHOD**

(30) Priority: 02.11.2023 CN 202311459552
(71) Applicant: HUAWEI TECHNOLOGIES CO., LTD., Shenzhen, Guangdong 518129 (CN)
(72) Inventor: WU, Yue, Shenzhen, Guangdong 518129 (CN); DUAN, Jianhong, Shenzhen, Guangdong 518129 (CN); ZUO, Tianjian, Shenzhen, Guangdong 518129 (CN); QI, Yunlei, Shenzhen, Guangdong 518129 (CN)
(74) Representative: Körber, Martin Hans
(86) International application number: PCT/CN2024/099993
(87) International publication number: WO 2025/091936

(57) **Abstract**

Embodiments of this application provide an optical module, a network device, a communication system, and a co-cable detection method. An optical module serving as a transmit end sends an optical pulse signal having a predetermined code pattern, so that a receive-end device determines a location feature of a reflection point based on an electrical signal generated based on the received optical signal. This helps detect, based on location features of reflection points in different optical fiber links, whether the optical fiber links are co-cable. Because co-cable detection does not rely on OTDR, and the receive-end device is responsible for determining a location feature of a reflection point, application limitations of the OTDR technology are reduced to some extent, so that the optical module serving as a transmit end does not need to implement the OTDR by incorporating various additional components for processing a reflected signal such as separating and sampling the reflected signal. This reduces overall power consumption of a transmit-end optical module that is caused by the additional components in implementing the OTDR technology.

## Description

This application claims priority to Chinese Patent Application No. 202311459552.4, filed with the China National Intellectual Property Administration on November 2, 2023 and entitled "OPTICAL MODULE, NETWORK DEVICE, COMMUNICATION SYSTEM, AND CO-CABLE DETECTION METHOD", which is incorporated herein by reference in its entirety.

### TECHNICAL FIELD

This application relates to the communication field, and in particular, to an optical module, a network device, a communication system, and a co-cable detection method.

### BACKGROUND

In a communication network, an optical cable connected between two devices for long-distance transmission usually passes through a plurality of optical switching boxes (optical switching box). This is equivalent to that one optical cable is divided into a plurality of optical cable sections by a plurality of optical switching boxes. The optical switching box is deployed between an optical module connected to a transmit-end device and an optical module connected to a receive end. For example, the optical module connected to the transmit-end device is connected to a first optical distribution frame (optical distribution frame, ODF) through an optical cable, the first ODF is connected to a first optical switching box through an optical cable, the first optical switching box is connected to a second optical switching box through an optical cable, the second optical switching box is connected to a second ODF through an optical cable, and the second ODF is connected, through an optical cable, to the optical module connected to the receive-end device. If different optical fiber links share a same optical cable section, all optical fiber links in the optical cable section are disconnected when the optical cable section is disconnected due to an external factor such as construction, affecting communication reliability. Therefore, how to implement co-cable detection (that is, detect whether different optical fiber links are located in a same optical cable section) is very important for an optical communication network.

When co-cable detection is performed by using an optical time domain reflectometry (Optical Time Domain Reflectometry, OTDR) technology, an optical module implements co-cable detection through self-sending and self-receiving. In addition, many components such as a microcontroller unit (microcontroller unit, MCU), a driver (driver, DRV), a receiver optical assembly (Receiver Optical Sub-Assembly, ROSA), and a filter are added inside the optical module to implement the OTDR. Specifically, after an optical module serving as a transmit end transmits an optical signal, in a process of transmitting the optical signal in an optical fiber link, when the optical signal enters another connector from one connector in the optical fiber link, refraction occurs. A part of the optical signal is reflected back to generate a reflected signal. Serving as a transmit end, the optical module receives the reflected signal through an additional component, separates the reflected signal from the original optical signal, and performs co-cable detection by using the separated reflected signal.

When co-cable detection is performed by using the OTDR, many components need to be added inside the optical module serving as a transmit end, causing high power consumption of the optical module.

### SUMMARY

Embodiments of this application provide an optical module, a network device, an optical communication system, and a co-cable detection method, to help reduce power consumption of the optical module. Technical solutions are as follows.

According to a first aspect, an optical module is provided. The optical module is a first optical module, the first optical module includes an electrical interface, an electrical-to-optical converter, and an optical interface, the electrical interface is connected to a first network device, the optical interface is connected to a second optical module through a first optical fiber link, the second optical module is further connected to a second network device, and the first optical fiber link includes a reflection point. The electrical-to-optical converter is configured to generate a first optical signal, where the first optical signal includes an optical pulse signal having a predetermined code pattern, and the predetermined code pattern is used to describe a shape of a relationship curve between a signal power and a time. The optical interface is configured to send the first optical signal to the second optical module through the first optical fiber link, so that the second network device determines a location feature of the reflection point in the first optical fiber link based on an electrical signal generated by the second optical module based on the received optical signal, where the location feature of the reflection point is used to detect whether the first optical fiber link and a second optical fiber link share a same optical cable section.

Based on the optical module provided in the first aspect, an optical module serving as a transmit end sends an optical pulse signal having a predetermined code pattern, so that a receive-end device determines a location feature of a reflection point based on an electrical signal generated from the received optical signal. This helps detect, based on location features of reflection points in different optical fiber links, whether the optical fiber links are co-cable. Because co-cable detection does not rely on OTDR, and the receive-end device is responsible for determining a location feature of a reflection point, application limitations of the OTDR technology are reduced to some extent, so that the optical module serving as a transmit end does not need to implement the OTDR by incorporating various additional components (such as an MCU, an MCM, a DRV, a ROSA, and a filter) for processing a reflected signal such as separating and sampling the reflected signal. This reduces overall power consumption of a transmit-end optical module that is caused by the additional components in implementing the OTDR technology.

In addition, considering that the optical module tends toward miniaturized packaging, the optical module provided in this embodiment helps implement co-cable detection to some extent, and avoids adding an additional component in limited space of the optical module, so that the optical module can maintain a small size, and does not need to occupy more space to place an additional component. This reduces a technical difficulty that co-cable detection cannot be implemented because the limited space of the optical module makes it difficult to deploy an additional component in the transmit-end optical module in the OTDR technology, and reduces dependence on size integration of the optical module.

In addition, since a slight change of hardware of the optical module (based on an existing hardware structure of the optical module) can also help implement co-cable detection to some extent, compatibility with an existing optical module is good. This facilitates smooth evolution of the existing optical module to implement co-cable detection without requiring re-iteration of a hardware version of the optical module, and reduces implementation complexity of co-cable detection based on the optical module.

In addition, this also reduces costs of the entire optical module caused by the additional component in the transmit-end optical module in the OTDR technology.

In addition, this also reduces adverse impact caused by the additional component in the transmit-end optical module on heat dissipation and energy saving of the optical module in the OTDR technology.

In addition, a special-purpose OTDR module does not need to be inserted into a port of a mainboard of a transmit-end device to implement co-cable detection, thereby saving a port occupied by the special-purpose OTDR module on the mainboard of the transmit-end device. This helps improve port utilization of the mainboard of the transmit-end device, and is more applicable to a high-port-density application scenario.

In some implementations, the electrical-to-optical converter includes a laser, and the first optical module is configured to perform pilot tone modulation on an optical signal generated by the laser, so that the laser outputs the first optical signal.

Pilot tone modulation is performed on an optical signal generated by the laser, so that the optical module sends an optical pulse signal having a predetermined code pattern. Therefore, an execution location of signal code pattern modulation is very close to an optical port. For example, after the transmit-end optical module performs a signal processing procedure such as electrical signal processing and electrical-to-optical conversion, pilot tone modulation is performed before an optical signal is transmitted, to implement signal code pattern modulation, thereby reducing a deviation between a code pattern of an optical signal actually transmitted by the optical module and the predetermined code pattern that is caused by performing the signal processing procedure such as electrical signal processing and electrical-to-optical conversion. This reduces interference caused by the deviation between the code pattern of the optical signal actually sent by the optical module and the predetermined code pattern to determining of a location feature of a reflection point by the receive-end device, thereby helping improve the location feature of the reflection point determined by the receive-end device, and improving accuracy of co-cable detection.

In addition, an optical pulse signal having a predetermined code pattern can be generated based on a general-purpose optical module, and the optical module does not need to include an oDSP for modulation of the predetermined code pattern. This further improves a range of optical modules applicable to the solution, and reduces a requirement of co-cable detection on a transmit-end optical module.

In addition, a board-mounted service chip of a network device does not need to be changed, so that the board-mounted service chip of the network device can modulate an electrical signal having a predetermined code pattern. This reduces a requirement on the board-mounted service chip of the network device.

The laser is configured to generate the first optical signal based on a first bias current, where a modulation curve between the first bias current and an output optical power of the laser corresponds to the predetermined code pattern.

The bias current of the laser is adjusted based on the modulation curve, so that the output optical power of the laser can fluctuate within a range corresponding to the predetermined code pattern. Therefore, the laser can output the optical pulse signal having the predetermined code pattern.

The first optical module further includes a microcontroller unit MCU, and the MCU is configured to generate the first bias current, and input the first bias current to the laser; or the electrical interface is further electrically connected to a signal source located outside the first optical module, and the electrical interface receives the first bias current from the signal source, and inputs the first bias current to the laser.

The foregoing provides a plurality of bias current sources, which are applicable to more scenarios.

In some implementations, the electrical-to-optical converter further includes a driver. The driver is configured to generate a first drive electrical signal based on a first control signal, and output the first drive electrical signal to the laser, where a modulation curve between the first drive electrical signal and an output optical power of the laser corresponds to the predetermined code pattern.

The laser is configured to generate the first optical signal based on the first drive electrical signal.

Because the driver drives the laser to generate the optical pulse signal having the predetermined code pattern, a deviation between a code pattern of an optical signal actually sent by the optical module and the predetermined code pattern that is caused by performing a signal processing procedure such as electrical signal processing and electrical-to-optical conversion is reduced. This reduces interference caused by the deviation between the code pattern of the optical signal actually sent by the optical module and the predetermined code pattern to determining of a location feature of a reflection point by the receive-end device, thereby helping improve the location feature of the reflection point determined by the receive-end device, and improving accuracy of co-cable detection. In addition, because the driver and the laser are general-purpose hardware in the optical module, a special-purpose signal processor does not need to be configured in the optical module to modulate the optical pulse signal having the predetermined code pattern. This reduces a requirement of the optical module for modulating the optical pulse signal having the predetermined code pattern.

In some implementations, the first optical module further includes an optical digital signal processor oDSP, and the oDSP is configured to generate a first electrical signal, where the first electrical signal includes an electrical pulse signal having a predetermined code pattern; and the electrical-to-optical converter is configured to perform electrical-to-optical conversion on the first electrical signal to generate the first optical signal.

By using the oDSP to generate the electrical signal having the predetermined code pattern is generated, the electrical signal received by the electrical-to-optical converter has the predetermined code pattern. Therefore, an optical signal that is output by the electrical-to-optical converter after the electrical-to-optical converter performs electrical-to-optical conversion on the electrical signal also has the predetermined code pattern, thereby eliminating reliance on a service chip on the mainboard to generate the electrical signal having the predetermined code pattern. In addition, the electrical-to-optical converter in the optical module does not need to support pilot tone modulation to generate the optical signal having the predetermined code pattern, thereby reducing implementation complexity of the electrical-to-optical converter in the optical module.

In some implementations, the electrical interface is configured to receive a first electrical signal from the first network device, where the first electrical signal includes an electrical pulse signal having a predetermined code pattern; and the electrical-to-optical converter is configured to perform electrical-to-optical conversion on the first electrical signal to generate the first optical signal.

Because an electrical pulse signal received by the optical module has the predetermined code pattern, after the optical module performs electrical-to-optical conversion on the electrical pulse signal having the predetermined code pattern, a generated optical pulse signal has the predetermined code pattern, thereby implementing a function of generating the optical pulse signal having the predetermined code pattern. In addition, the optical module does not need to support pilot tone modulation to generate an optical signal having the predetermined code pattern, thereby reducing implementation complexity of the optical module.

In some implementations, the electrical-to-optical converter generates an optical pulse signal having a predetermined code pattern based on a predetermined time interval, to generate the first optical signal, where the first optical signal includes optical pulse signals having a plurality of periods, and the optical pulse signal has the predetermined code pattern in each period.

Considering that if a transmit-end optical module sends only an optical pulse signal having a predetermined code pattern in one period, and a receive-end device samples only a signal in one period, because a data amount of the sampled signal is limited, a location feature of a reflection point that is determined by the receive end may be insufficiently accurate. Therefore, the transmit-end optical module periodically sends the optical pulse signal having the predetermined code pattern, so that a receive-end optical module can sample signals in a plurality of periods, to increase a data amount of the signals sampled by the receive-end optical module, thereby helping improve accuracy of a location feature of a reflection point that is determined by the receive end.

In some implementations, duration of one pulse in the optical pulse signal having the predetermined code pattern is less than 1 µs, and a duty cycle of the optical pulse signal having the predetermined code pattern is less than 5%. Because the duration of the pulse signal is less than 1 microsecond, it is equivalent to that a signal pulse sent by the transmit end is very short, or a signal sent by the transmit end has a high resolution in time domain. Therefore, signal sharpness and definition can be increased, so that the receive end can more easily detect a pulse change, and more accurately obtain an original signal (the optical pulse signal having the predetermined code pattern) through identification. In addition, this helps the receive end more accurately distinguish between start locations and end locations of the original signal (the optical pulse signal having the predetermined code pattern) and a reflected signal (a secondary pulse signal), making a result of comparing a primary pulse signal and a secondary pulse signal by the receive end more accurate.

In some implementations, the predetermined code pattern includes a square wave, a sine wave, or a triangular wave.

Because a code pattern of an optical pulse signal modulated by a transmit-end optical module may be various code patterns such as a square-wave pulse signal, a sine-wave pulse signal, or a triangular-wave pulse signal, dependence on a modulation format of the optical module is small, greatly expanding applicable optical module types.

In some implementations, the predetermined code pattern is a square-wave pulse signal.

Because implementation complexity of generating a square-wave pulse signal is relatively low, and the square-wave pulse signal is relatively narrow (a duty cycle is relatively small), it is relatively simple for the receive-end device to analyze the square-wave pulse signal to obtain a location feature of a reflection point. This reduces overall implementation complexity of the solution.

According to a second aspect, an optical module is provided. The optical module is a second optical module, the second optical module includes an electrical interface, an optical-to-electrical converter, an analog-to-digital converter, and an optical interface, the electrical interface is connected to a second network device, the optical interface is connected to a first optical fiber link, the first optical fiber link is connected to a first optical module, the first optical fiber link includes the first optical fiber link, and the first optical fiber link includes a reflection point.

The optical interface is configured to receive a first optical signal from the first optical module through the first optical fiber link, where the first optical signal includes an optical pulse signal having a predetermined code pattern, and the predetermined code pattern is a shape of a relationship curve between a signal power and a time.

The optical-to-electrical converter is configured to perform optical-to-electrical conversion on the first optical signal to obtain an analog electrical signal.

The analog-to-digital converter is configured to sample the analog electrical signal based on a predetermined sampling frequency to obtain a digital electrical signal, where a ratio of the predetermined sampling frequency to a signal frequency corresponding to the predetermined code pattern meets a condition.

The electrical interface is configured to send the digital electrical signal to the second network device, so that the second network device determines a location feature of the reflection point in the first optical fiber link based on the digital electrical signal, where the location feature of the reflection point is used to detect whether the first optical fiber link and a second optical fiber link share a same optical cable section.

Based on the optical module provided in the second aspect, after an optical module of a receive end receives an optical signal from an optical fiber link, the optical module of the receive end performs optical-to-electrical conversion on the received optical signal to obtain an analog electrical signal; the optical module of the receive end samples the analog electrical signal to obtain a digital electrical signal; the optical module of the receive end sends the digital electrical signal to a service chip of the receive end; and the service chip of the receive end identifies a primary pulse signal and a secondary pulse signal based on the digital electrical signal, and compares a parameter of the primary pulse signal with a parameter of the secondary pulse signal to obtain a location feature of a reflection point.

In particular, considering that an optical signal is a continuously changing analog signal, an amplitude and a shape of the optical signal may greatly vary. By converting the optical signal into an electrical signal, for example, converting a power of the optical signal into a voltage or a current, parameters (for example, an amplitude and a time location) of the obtained analog electrical signal are related to the optical signal. Considering that most service chips do not support direct analysis of the analog electrical signal but support processing of discrete digital data, the optical module samples the analog signal, and converts the analog electrical signal into a digital electrical signal, so that the service chip extracts a parameter of a primary pulse signal and a parameter of a secondary pulse signal from the digital electrical signal.

In some implementations, the signal frequency corresponding to the predetermined code pattern is greater than 1 MHz, and the sampling frequency is greater than 10 MHz.

The receive-end optical module samples, at a sampling frequency greater than 10 MHz, an electrical signal converted from the optical signal, so that signal details can be better collected, thereby further reducing distortion of the predetermined code pattern and information loss in a sampling process. This improves accuracy of a location feature of a reflection point that is determined by the receive-end service chip based on a sampling result of the receive-end optical module, and helps improve accuracy of co-cable detection.

According to a third aspect, a network device is provided. The network device is a first network device, the first network device includes a service chip and an electrical interface, and the electrical interface is connected to the first optical module according to the first aspect or any optional manner of the first aspect.

The service chip is configured to generate a first electrical signal, where the first electrical signal includes an electrical pulse signal having a predetermined code pattern, and the service chip sends the first electrical signal to the first optical module through the electrical interface.

Because an electrical pulse signal sent by the service chip has a predetermined code pattern, an electrical pulse signal received by the optical module has the predetermined code pattern. Therefore, after the optical module performs electrical-to-optical conversion on the electrical pulse signal having the predetermined code pattern, a generated optical pulse signal has the predetermined code pattern, thereby implementing a function of generating the optical pulse signal having the predetermined code pattern. In addition, the optical module does not need to support pilot tone modulation to generate an optical signal having the predetermined code pattern, thereby reducing implementation complexity of the optical module.

In some implementations, the service chip detects a status of the service chip, and when the service chip is in an idle state, the service chip sends the electrical pulse signal having the predetermined code pattern. The electrical pulse signal having the predetermined code pattern is converted into the optical pulse signal having the predetermined code pattern through the electrical-to-optical converter in the optical module, and the optical pulse signal having the predetermined code pattern is transmitted to the second network device through an optical fiber link. Because the optical pulse signal having the predetermined code pattern is sent when the service chip is in an idle state, the optical pulse signal having the predetermined code pattern that is used for co-cable detection almost does not occupy a processing time of service data, thereby reducing impact of a process of transmitting the optical pulse signal having the predetermined code pattern on transmission quality of the service data.

According to a fourth aspect, a network device is provided. The network device is a second network device, the second network device includes a service chip and an electrical interface, and the electrical interface is connected to the second optical module according to the second aspect or any optional manner of the second aspect.

The electrical interface is configured to receive a digital electrical signal from the second optical module.

The service chip is configured to determine a location feature of a reflection point in a first optical fiber link based on the digital electrical signal.

The location feature of the reflection point is used to detect whether the first optical fiber link and a second optical fiber link share a same optical cable section.

The location feature of the reflection point is a parameter used to describe a location of the reflection point in an optical fiber link. In some implementations, the location feature of the reflection point represents a relative location of the reflection point.

The service chip determines a location feature of a reflection point in an optical fiber link based on a digital electrical signal from an optical module. The location feature of the reflection point helps locate, to some extent, a location at which an optical signal is reflected during transmission through an optical fiber link, thereby helping estimate a location of an optical cable connector in the optical fiber link. For example, location features of reflection points in different optical fiber links can be used as a basis for determining whether the different optical fiber links share a same optical cable section. If location features of reflection points in two optical fiber links match, it can be determined that there is a risk that the two optical fiber links share a same optical cable section. Specifically, a cause of a reflection point is related to an optical cable connector. Generally, a reflection point is very likely to be generated at a location at which an optical fiber link is connected to a port of an optical cable connector. Therefore, if location features of all reflection points in two optical fiber links are the same, it indicates that the two optical fiber links may pass through a same optical cable connector, causing a co-cable risk.

In some implementations, the service chip is configured to determine a primary pulse signal in the digital electrical signal and a secondary pulse signal in the digital electrical signal, and compare a parameter of the primary pulse signal with a parameter of the secondary pulse signal to obtain the location feature of the reflection point, where the primary pulse signal is generated by performing optical-to-electrical conversion and sampling on the optical pulse signal having the predetermined code pattern, and the secondary pulse signal is generated by performing optical-to-electrical conversion and sampling on a derivative tail signal that is generated by reflecting the optical pulse signal having the predetermined code pattern at the reflection point during transmission through the first optical fiber link.

In some implementations, the location feature of the reflection point includes a distance between a location of the primary pulse signal and a location of a secondary pulse signal corresponding to the reflection point, the location of the primary pulse signal indicates a time at which the primary pulse signal arrives at the second network device, and the location of the secondary pulse signal indicates a time at which the secondary pulse signal arrives at the second network device.

The service chip is configured to compare the location of the primary pulse signal with the location of the secondary pulse signal to obtain the distance between the location of the primary pulse signal and the location of the secondary pulse signal.

The location feature of the reflection point indicates a time difference between the time at which the receive-end service chip receives the primary pulse signal and the time at which the receive-end service chip receives the secondary pulse signal, or a time difference between the time at which the receive-end optical module obtains the primary pulse signal through sampling and the time at which the receive-end optical module obtains the secondary pulse signal through sampling. A shorter distance between a reflection point and the transmit end indicates a shorter distance between a secondary pulse signal corresponding to the reflection point and the primary pulse signal in a time dimension. Therefore, a location feature of the reflection point corresponding to the secondary pulse signal can be determined by comparing the secondary pulse signal with the primary pulse signal.

In some implementations, the location feature of the reflection point includes a distance between an amplitude of the primary pulse signal and an amplitude of a secondary pulse signal corresponding to the reflection point, the amplitude of the primary pulse signal indicates a power of the primary pulse signal, and the amplitude of the secondary pulse signal indicates a power of the secondary pulse signal. The service chip is configured to compare the amplitude of the primary pulse signal with the amplitude of the secondary pulse signal to obtain the distance between the amplitude of the primary pulse signal and the amplitude of the secondary pulse signal.

In some implementations, the service chip is configured to determine the primary pulse signal and the secondary pulse signal from the digital electrical signal based on an amplitude value of the digital electrical signal, where the primary pulse signal is a pulse signal with a maximum amplitude value in the digital electrical signal, and the secondary pulse signal is a primary pulse signal with a non-maximum amplitude value in the digital electrical signal.

A shorter distance between a reflection point and the transmit end indicates a shorter distance between a secondary pulse signal corresponding to the reflection point and the primary pulse signal in a signal strength dimension. Therefore, a location feature of the reflection point corresponding to the secondary pulse signal can be determined by comparing the amplitude value of the secondary pulse signal with the amplitude value of the primary pulse signal.

In some implementations, the service chip is configured to: select a target secondary pulse signal from secondary pulse signals through screening based on locations of the secondary pulse signals, where a distance between a location of the target secondary pulse signal and the location of the primary pulse signal is greater than a distance threshold; and
compare the parameter of the primary pulse signal with a parameter of the target secondary pulse signal to obtain the location feature of the reflection point.

Because a distance between a secondary pulse signal and the primary pulse signal represents a distance between a physical location of a reflection point that generates the secondary pulse signal and a physical location of the transmit-end device, and the distance between the secondary pulse signal and the primary pulse signal being less than the distance threshold indicates that the distance between the reflection point that generates the secondary pulse signal and the transmit-end device is very short, it is highly probable that the secondary pulse signal is not generated by a reflection point at a port of an optical cable connector, and the secondary pulse signal whose distance is less than the distance threshold is excluded from a signal comparison range through signal screening. This reduces a risk that a reflected signal that is not generated by a reflection point at a port of an optical cable connector causes an error in a location feature of a reflection point, and helps improve accuracy of co-cable detection.

In some implementations, the service chip is configured to: select a target secondary pulse signal from secondary pulse signals through screening based on amplitudes of the secondary pulse signals, where an amplitude of the target secondary pulse signal is greater than an amplitude threshold, or the amplitude of the target secondary pulse signal ranks in a top preset quantity of positions in the secondary pulse signals; and compare the parameter of the primary pulse signal with a parameter of the target secondary pulse signal to obtain the location feature of the reflection point.

Considering that a larger amplitude value of a secondary pulse signal indicates greater strength of the secondary pulse signal, it indicates that a reflected signal corresponding to the secondary pulse signal is stronger, a probability that the secondary pulse signal comes from a reflected signal of a reflection point at a port of an optical cable connector is higher, and a location feature of a reflection point extracted based on the secondary pulse signal is more accurate. The target secondary pulse signal is selected through screening based on the amplitudes of the secondary pulse signals, thereby reducing interference of a weak reflected signal to co-cable detection. This helps improve accuracy of co-cable detection.

In some implementations, the service chip is further configured to send the location feature of the reflection point in the first optical fiber link to an analysis device.

In some implementations, the service chip is further configured to obtain a location feature of the reflection point in the second optical fiber link, and determine, in response to the location feature of the reflection point in the first optical fiber link and the location feature of the reflection point in the second optical fiber link meeting a matching condition, that the first optical fiber link and the second optical fiber link share the same optical cable section.

According to a fifth aspect, a co-cable detection method is provided. The method includes:
receiving a first optical signal from a first optical fiber link;
determining a location feature of a reflection point in the first optical fiber link based on the first optical signal;
receiving a second optical signal from a second optical fiber link;
determining a location feature of a reflection point in the second optical fiber link based on the second optical signal; and
determining, in response to the location feature of the reflection point in the first optical fiber link and the location feature of the reflection point in the second optical fiber link meeting a matching condition, that the first optical fiber link and the second optical fiber link share a same optical cable section.

In some implementations, determining, in response to the location feature of the reflection point in the first optical fiber link and the location feature of the reflection point in the second optical fiber link meeting the matching condition, that the first optical fiber link and the second optical fiber link share the same optical cable section includes:
determining, in response to a quantity of reflection points that are in the first optical fiber link and that have a same location feature as those in the second optical fiber link being greater than a quantity threshold, that the first optical fiber link and the second optical fiber link share the same optical cable section; or
determining, in response to a location feature of each reflection point in the first optical fiber link being the same as a location feature of a corresponding reflection point in the second optical fiber link, that the first optical fiber link and the second optical fiber link share the same optical cable section.

According to a sixth aspect, a communication system is provided. The communication system includes a first network device, a first optical module, a second network device, a second optical module, a third network device, a third optical module, a fourth network device, and a fourth optical module.

The first network device is connected to the first optical module, the first optical module is connected to the second optical module through a first optical fiber link, the second optical module is connected to the second network device, the third network device is connected to the third optical module, the third optical module is connected to the fourth optical module through a second optical fiber link, and the fourth optical module is connected to the fourth network device.

The first optical module is configured to send a first optical signal to the second optical module through the first optical fiber link, where the first optical signal includes an optical pulse signal having a predetermined code pattern, and the predetermined code pattern is used to describe a shape of a relationship curve between a signal power and a time.

The second optical module is configured to receive the first optical signal through the first optical fiber link, and perform optical-to-electrical conversion and sampling on the first optical signal to obtain a first digital electrical signal.

The second network device is configured to determine a location feature of a reflection point in the first optical fiber link based on the first digital electrical signal.

The third optical module is configured to send a second optical signal to the fourth optical module through the second optical fiber link, where the second optical signal includes an optical pulse signal having the predetermined code pattern.

The fourth optical module is configured to receive the second optical signal through the first optical fiber link, and perform optical-to-electrical conversion and sampling on the second optical signal to obtain a second digital electrical signal.

The fourth network device is configured to determine a location feature of a reflection point in the second optical fiber link based on the second digital electrical signal.

In some implementations, the system further includes an analysis device, and the analysis device is separately connected to the second network device and the fourth network device.

The second network device is further configured to send the location feature of the reflection point in the first optical fiber link to the analysis device.

The fourth network device is further configured to send the location feature of the reflection point in the second optical fiber link to the analysis device.

The analysis device is configured to determine, in response to the location feature of the reflection point in the first optical fiber link and the location feature of the reflection point in the second optical fiber link meeting a matching condition, that the first optical fiber link and the second optical fiber link share a same optical cable section.

According to a seventh aspect, a co-cable detection apparatus is provided. The apparatus includes:
a receiving unit, configured to receive a first optical signal from a first optical fiber link; and
a processing unit, configured to determine a location feature of a reflection point in the first optical fiber link based on the first optical signal.

The receiving unit is further configured to receive a second optical signal from a second optical fiber link.

The processing unit is further configured to determine a location feature of a reflection point in the second optical fiber link based on the second optical signal, and determine, in response to the location feature of the reflection point in the first optical fiber link and the location feature of the reflection point in the second optical fiber link meeting a matching condition, that the first optical fiber link and the second optical fiber link share a same optical cable section.

In some implementations, the processing unit is configured to: determine, in response to a quantity of reflection points that are in the first optical fiber link and that have a same location feature as those in the second optical fiber link being greater than a quantity threshold, that the first optical fiber link and the second optical fiber link share a same optical cable section; or determine, in response to a location feature of each reflection point in the first optical fiber link being the same as a location feature of a corresponding reflection point in the second optical fiber link, that the first optical fiber link and the second optical fiber link share a same optical cable section.

In some implementations, the processing unit is configured to determine a primary pulse signal in a digital electrical signal and a secondary pulse signal in the digital electrical signal, and compare a parameter of the primary pulse signal with a parameter of the secondary pulse signal to obtain a location feature of a reflection point, where the primary pulse signal is generated by performing optical-to-electrical conversion and sampling on an optical pulse signal having a predetermined code pattern, and the secondary pulse signal is generated by performing optical-to-electrical conversion and sampling on a derivative tail signal that is generated by reflecting the optical pulse signal having the predetermined code pattern at the reflection point during transmission through the first optical fiber link.

In some implementations, the location feature of the reflection point includes a distance between a location of the primary pulse signal and a location of a secondary pulse signal corresponding to the reflection point, the location of the primary pulse signal indicates a time at which the primary pulse signal arrives at a second network device, and the location of the secondary pulse signal indicates a time at which the secondary pulse signal arrives at the second network device.

The processing unit is configured to compare the location of the primary pulse signal with the location of the secondary pulse signal to obtain the distance between the location of the primary pulse signal and the location of the secondary pulse signal.

In some implementations, the location feature of the reflection point includes a distance between an amplitude of the primary pulse signal and an amplitude of a secondary pulse signal corresponding to the reflection point, the amplitude of the primary pulse signal indicates a power of the primary pulse signal, and the amplitude of the secondary pulse signal indicates a power of the secondary pulse signal. The processing unit is configured to compare the amplitude of the primary pulse signal with the amplitude of the secondary pulse signal to obtain the distance between the amplitude of the primary pulse signal and the amplitude of the secondary pulse signal.

In some implementations, the processing unit is configured to determine the primary pulse signal and the secondary pulse signal from the digital electrical signal based on an amplitude value of the digital electrical signal, where the primary pulse signal is a pulse signal with a maximum amplitude value in the digital electrical signal, and the secondary pulse signal is a primary pulse signal with a non-maximum amplitude value in the digital electrical signal.

In some implementations, the processing unit is configured to: select a target secondary pulse signal from secondary pulse signals through screening based on locations of the secondary pulse signals, where a distance between a location of the target secondary pulse signal and the location of the primary pulse signal is greater than a distance threshold; and
compare the parameter of the primary pulse signal with a parameter of the target secondary pulse signal to obtain the location feature of the reflection point.

According to an eighth aspect, an analysis device is provided. The analysis device includes a processor, the processor is coupled to a memory, the memory stores at least one computer program instruction, and the at least one computer program instruction is loaded and executed by the processor, so that the analysis device implements the method provided by the analysis device according to the sixth aspect or any optional manner of the sixth aspect. For details of the analysis device provided in the eighth aspect, refer to the sixth aspect or any optional manner of the sixth aspect. Details are not described herein again.

According to a ninth aspect, a computer-readable storage medium is provided. The storage medium stores at least one instruction. When the instruction is run on a computer, the computer is enabled to perform the method according to the fifth aspect or any optional manner of the fifth aspect.

According to a tenth aspect, a computer program product is provided. The computer program product includes one or more computer program instructions. When the computer program instructions are loaded and run by a computer, the computer is enabled to perform the method according to the fifth aspect or any optional manner of the fifth aspect.

According to an eleventh aspect, a chip is provided, including a memory and a processor. The memory is configured to store computer instructions, and the processor is configured to invoke the computer instructions from the memory and run the computer instructions, to perform the method according to the fifth aspect and any possible implementation of the fifth aspect.

### BRIEF DESCRIPTION OF DRAWINGS

FIG. 1 is a diagram of an architecture of a network system according to an embodiment of this application;
FIG. 2 is a diagram of an architecture of a network system according to an embodiment of this application;
FIG. 3 is a diagram of an architecture of a network system according to an embodiment of this application;
FIG. 4(a) to FIG. 4(d) are diagrams of a hardware structure of a network system according to an embodiment of this application;
FIG. 5 is a diagram of an example structure of a cross section of an optical cable according to an embodiment of this application;
FIG. 6A and FIG. 6B collectively illustrate a schematic flowchart of a co-cable detection method according to an embodiment of this application;
FIG. 7 is a schematic flowchart of a co-cable detection method according to an embodiment of this application;
FIG. 8 is a diagram of a hardware structure of an optical module according to an embodiment of this application;
FIG. 9 is a schematic flowchart of a co-cable detection method according to an embodiment of this application;
FIG. 10 is a diagram of a hardware structure of an optical module according to an embodiment of this application;
FIG. 11 is a schematic flowchart of a co-cable detection method according to an embodiment of this application;
FIG. 12 is a schematic flowchart of a co-cable detection method according to an embodiment of this application;
FIG. 13 is a diagram of an optical pulse signal having a predetermined code pattern according to an embodiment of this application;
FIG. 14 is a diagram of an optical pulse signal having a predetermined code pattern according to an embodiment of this application;
FIG. 15 is a diagram of an optical pulse signal having a predetermined code pattern according to an embodiment of this application;
FIG. 16 is a diagram of a modulation curve of a laser according to an embodiment of this application;
FIG. 17 is a diagram of a modulation curve according to an embodiment of this application; and
FIG. 18 is a diagram of a digital electrical signal sequence received by a receive-end service chip according to an embodiment of this application.

### DESCRIPTION OF EMBODIMENTS

To make the objectives, technical solutions, and advantages of this application clearer, the following further describes the implementations of this application in detail with reference to the accompanying drawings.

The following explains and describes some terms and concepts in embodiments of this application.

### (1) Code pattern

The code pattern may also be referred to as a pattern (pattern), a signal feature, or modulation information carried in a signal. For example, the code pattern is a signal waveform shape. The code pattern is a shape of a relationship curve between a signal waveform amplitude and a time. For example, the code pattern is a shape of a relationship curve between a signal power and a time, and the code pattern indicates how the signal power continuously changes over time. For another example, the code pattern is a shape of a relationship curve between a signal current and a time. For still another example, the code pattern is a shape of a relationship curve between a signal voltage and a time. For example, a code pattern type includes a square wave, a sine wave, or a triangular wave. A parameter that can describe the code pattern includes at least one of a code pattern type, a pulse width, a pulse period, a duty cycle, a peak amplitude, a valley amplitude, a signal frequency, a rise time, and a fall time.

### (2) Predetermined code pattern

The predetermined code pattern is a preset code pattern. In some implementations of this application, an optical signal sent by an optical module of a transmit end has a predetermined code pattern. The predetermined code pattern indicates a correspondence between an optical signal power and a time. The predetermined code pattern indicates how the optical signal power changes over time.

In a specific example, an optical pulse signal having a predetermined code pattern includes but is not limited to a square wave, a sine wave, or a triangular wave. When the predetermined code pattern is a square wave, the optical signal power alternates between a peak power and a valley power based on a predetermined time interval. For example, in one period, the optical signal power rapidly increases from the valley power to the peak power, and then rapidly decreases from the peak power to the valley power. When the predetermined code pattern is a sine wave, the optical signal power presents a linear increase and decrease change trend based on a predetermined time rule, and a relationship between an optical signal power and a time complies with a sine function rule. In one period, the optical signal power gradually increases from a valley power to a peak power, and then gradually decreases from a peak power to a valley power. When the predetermined code pattern is a triangular wave, the optical signal power presents a linear increase and linear decrease change trend based on a predetermined time interval.

In some other implementations of this application, an electrical signal sent by a service chip of the transmit end has a predetermined code pattern. For example, a shape of a relationship curve between a current signal sent by the service chip and a time has a predetermined code pattern. The predetermined code pattern indicates how a current value of an electrical signal continuously changes over time. For another example, a shape of a relationship curve between a voltage signal sent by the service chip and a time has a predetermined code pattern. The predetermined code pattern indicates how a voltage value of an electrical signal continuously changes over time.

In a specific example, an electrical pulse signal having a predetermined code pattern includes but is not limited to a square wave, a sine wave, or a triangular wave. When the predetermined code pattern is a square wave, a power of an electrical signal sent by the service chip to the optical module alternates between a peak power and a valley power based on a predetermined time interval. For example, in one period, the electrical signal power rapidly increases from the valley power to the peak power, and then rapidly decreases from the peak power to the valley power. For another example, a current sent by the service chip to the optical module alternates between a peak current and a valley current based on a predetermined time interval. For another example, a voltage sent by the service chip to the optical module alternates between a peak voltage and a valley voltage based on a predetermined time interval. For another example, when the predetermined code pattern is a sine wave, a power of an electrical signal sent by the service chip to the optical module presents a linear increase and decrease change trend based on a predetermined time rule, and a relationship between an electrical signal power and a time complies with a sine function rule. In a period, the electrical signal power gradually increases from a valley power to a peak power, and then gradually decreases from a peak power to a valley power. When the predetermined code pattern is a triangular wave, a power of an electrical signal sent by the service chip to the optical module presents a linear increase and linear decrease change trend based on a predetermined time interval.

For a receive end, the predetermined code pattern is equivalent to an effective basis for determining a location feature of a reflection point. Specifically, in a process in which an optical signal sent by the transmit end is transmitted through an optical fiber link, because the optical signal is reflected by a reflection point, a code pattern of an optical signal received by the receive end changes compared with a code pattern of the optical signal sent by the transmit end; the receive end compares the code pattern of the received optical signal with the code pattern of the original signal transmitted by the transmit end, and can learn that the code pattern of the received signal changes compared with the code pattern of the original signal transmitted by the transmit end; and the receive end can determine, based on the code pattern change of the received signal compared with the original signal transmitted by the transmit end, a location feature of a reflection point in the optical fiber link that the signal passes through. Because the code pattern of the optical signal is preset, in other words, the original optical signal sent by the transmit end is a standard signal, this is equivalent to that a predetermined code pattern of the signal sent by the transmit end is information known to the receive end, and the receive end can easily distinguish between the original optical signal and a reflected signal based on the predetermined code pattern, thereby reducing implementation complexity of comparison analysis to determine a location feature of a reflection point.

### (3) Signal modulation

Signal modulation in embodiments of this application generally refers to a technology that enables a signal to have a predetermined code pattern. In other words, any technical means that allows a waveform of a signal to reflect a predetermined code pattern may be referred to as signal modulation. In some other implementations, a signal modulation object is an optical signal. In some implementations, a signal modulation object is an electrical signal. In some implementations, a service chip (a board-mounted service chip) disposed on a mainboard modulates an electrical signal. In some implementations, an optical module modulates an electrical signal or an optical signal. In some implementations, an optical module modulates an optical signal in an electrical-to-optical conversion process. In some other implementations, before electrical-to-optical conversion, an optical module modulates an electrical signal in a process of performing digital signal processing on the electrical signal. For specific technical implementation details of how to modulate a signal to enable the signal to have a predetermined code pattern, refer to Modulation scheme 1 to Modulation scheme 3 below.

### (4) Pulse signal

The pulse signal is a signal whose waveform rapidly changes in a short period of time. A main feature of the waveform of the pulse signal is that a signal amplitude value reaches a high peak value or a low peak value and then the signal amplitude value is restored to an initial state in a short period of time. The pulse signal is, for example, an electrical signal or an optical signal. Embodiments relate to an electrical-to-optical conversion procedure and an optical-to-electrical conversion procedure of a signal. To distinguish between a pulse signal with an electrical carrier and a pulse signal with an optical carrier, the pulse signal with an electrical carrier is referred to as an electrical pulse signal and the pulse signal with an optical carrier is referred to as an electrical pulse signal in the following.

### (5) Reflection point

The reflection point is also referred to as a feature point. The reflection point is a location at which an optical signal is reflected in an optical fiber link. One optical fiber link includes one or more reflection points. Generally, a reflection point exists at a location at which an optical fiber link is connected to a port of an optical cable connector. Specifically, a refractive index difference of light exists at the port of the optical cable connector. When an optical signal enters from an input port of the optical cable connector and is output from an output port of the optical cable connector, reflection is generated because of light refraction between two different media. Specifically, when the optical signal is transmitted from an optical fiber to the input port of the optical cable connector, because a medium change exists on two sides of the input port of the optical cable connector, for example, the output port of the optical cable connector is a boundary surface between glass and air, the optical signal is refracted at the input port of the optical cable connector. According to the Snell's law, when light enters an optically thinner medium from an optically denser medium, the light bends toward a normal line, and there is a relationship between an incident angle and a refraction angle. Some optical signals are totally reflected, that is, the optical signals cannot be completely refracted but are reflected back to an original medium. Similarly, when the optical signal leaves the output port of the optical cable connector, because a medium change also exists on two sides of the output port of the optical cable connector, the optical signal is also refracted at the output port of the optical cable connector. In addition, when an optical cable is connected to the port of the optical cable connector, a loose connection, a rough surface, an uneven optical fiber surface, and the like may occur, causing an optical signal to be reflected to some extent at the port of the optical cable connector, thereby generating a reflection point.

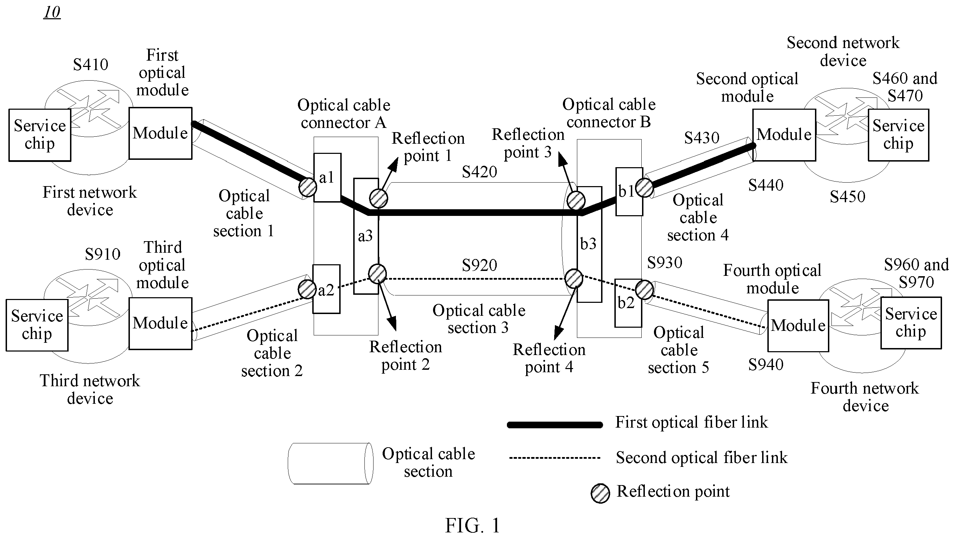

A scenario shown in FIG. 1 is used as an example. Because both a first optical fiber link and a second optical fiber link pass through an optical cable connector A and an optical cable connector B, the first optical fiber link and the second optical fiber link share a same optical cable section (an optical cable section 3). When the first optical fiber link passes through a port a3 of the optical cable connector A, because media on two sides of the port a3 are different, the medium on one side of the port a3 is a medium of the optical cable connector A, and the medium on the other side of the port a3 is a medium of the optical cable section 3, an optical signal transmitted in the first optical fiber link is reflected at the port a3, resulting in a reflection point. Similarly, when the second optical fiber link passes through the port a3 of the optical cable connector A, an optical signal transmitted in the second optical fiber link is also reflected at the port a3, resulting in a reflection point.

### (6) Derivative tail signal

The derivative tail signal is equivalent to a new signal component generated when an original optical signal sent by a transmit-end optical module passes through a reflection point. The derivative tail signal may also be understood as a feature left by a reflection point in an original optical signal when the original optical signal passes through the reflection point. The derivative tail signal is an additional signal in signals received by a receive end in addition to an original signal sent by a transmit end. The derivative tail signal is also referred to as an echo signal. The derivative tail signal includes a location feature of a reflection point. The derivative tail signal is, for example, a signal generated when an optical pulse signal having a predetermined code pattern is reflected by a reflection point in an optical fiber link during transmission through the optical fiber link. For example, the derivative tail signal is a signal generated when an optical pulse signal having a predetermined code pattern is reflected through a port of an optical cable connector. One derivative tail signal may be generated based on a plurality of reflections. For example, after an optical pulse signal having a predetermined code pattern that is sent by the transmit end passes through a reflection point during transmission, one reflected signal is generated, the reflected signal is reflected back to the transmit end through an optical fiber link, and when the reflected signal reaches an optical port of an optical module of the transmit end, the reflected signal is reflected again, and the signal reflected again enters the optical fiber link again and then is transmitted to the receive end. Because a transmission path of the reflected signal is a foldback path, and the transmission path of the reflected signal is longer than that of an original signal (the optical pulse signal having the predetermined code pattern) that is sent by the transmit end, a time at which the reflected signal arrives at the receive end is later than a time at which the original signal (the optical pulse signal having the predetermined code pattern) arrives at the receive end, and strength (energy) of the reflected signal is attenuated due to reflection, so that an amplitude value of the reflected signal is smaller than that of the original signal (the optical pulse signal having the predetermined code pattern), thereby forming signal tailing. Because the derivative tail signal is generated based on reflection of a reflection point, a parameter of the derivative tail signal can determine a location feature of the reflection point. In some implementations, the derivative tail signal is an optical signal. In some implementations, the derivative tail signal is an electrical signal. For example, the derivative tail signal is obtained by the receive end by performing optical-to-electrical conversion on a received optical signal. In some implementations, the derivative tail signal is a digital electrical signal. For example, the derivative tail signal is obtained by the receive end by performing optical-to-electrical conversion and sampling on a received optical signal. In some other implementations, the derivative tail signal is an analog electrical signal.

### (7) Primary pulse signal and secondary pulse signal

In some implementations of this application, a receive end performs optical-to-electrical conversion and sampling on a received optical signal, to determine a location feature of a reflection point. Because the optical signal received by the receive end includes not only an optical signal generated by a transmit end through an optical module, but also a derivative tail signal generated due to reflection in an optical fiber link, to distinguish between a signal obtained by performing optical-to-electrical conversion and sampling on the optical signal generated by the transmit-end optical module and a signal obtained by performing optical-to-electrical conversion and sampling on the derivative tail signal, in embodiments, the "primary pulse signal" is used to describe the signal generated by performing optical-to-electrical conversion and sampling on the optical signal generated by the transmit-end optical module, and the "secondary pulse signal" is used to describe the signal generated by performing optical-to-electrical conversion and sampling on the derivative tail signal. The following further explains a distinguishing feature between the primary pulse signal and the secondary pulse signal.

The primary pulse signal corresponds to the optical signal generated by the transmit end through the optical module. For example, the primary pulse signal has a predetermined code pattern.

In some implementations, the primary pulse signal is a signal at a frontmost location in a digital electrical signal sequence obtained by the receive end through sampling. A location of the primary pulse signal indicates a time at which the receive end receives the primary pulse signal (or a time at which the primary pulse signal arrives at a receive-end service chip or a time point at which the optical module obtains the pulse signal through sampling). For example, the location of the primary pulse signal is a coordinate of the location of the primary pulse signal on a time axis. That the primary pulse signal is at the frontmost location also indicates that the primary pulse signal appears earlier than another signal in the digital electrical signal sequence obtained by the receive end through sampling. For example, the primary pulse signal is a signal at an earliest receiving time point in the digital electrical signal sequence obtained by the receive end through sampling. For example, when the transmit end periodically sends an optical pulse signal having a predetermined code pattern, a primary pulse signal in a digital electrical signal sequence obtained through sampling in one period is, for example, a 1^{st} pulse signal in the digital electrical signal sequence in the period. For example, the primary pulse signal is an electrical signal obtained by the receive end through first sampling in one period.

Because the optical signal generated by the transmit end through the optical module is not reflected in the optical fiber link, a transmission path of the optical signal generated by the optical module is shorter than that of the derivative tail signal, so that the optical signal generated by the optical module arrives at the receive end before the derivative tail signal. Therefore, the primary pulse signal obtained after the optical signal generated by the optical module is sampled is at the frontmost location in the digital electrical signal sequence. Therefore, the receive end can accurately distinguish between the primary pulse signal and the secondary pulse signal based on a location of each signal in the digital electrical signal sequence, thereby helping determine a location feature of a reflection point by comparing a parameter difference between the primary pulse signal and the secondary pulse signal.

In some implementations, the primary pulse signal is a signal with a maximum amplitude in a digital electrical signal sequence obtained by the receive end through sampling. An amplitude of the primary pulse signal indicates an energy magnitude or strength of the primary pulse signal. For example, the amplitude of the primary pulse signal indicates a power of the primary pulse signal. For example, the amplitude of the primary pulse signal is a coordinate of the amplitude of the primary pulse signal on a vertical axis (a power axis). That the primary pulse signal has the maximum amplitude also indicates that the strength of the primary pulse signal in the digital electrical signal sequence obtained by the receive end through sampling is stronger than that of another signal. For example, when the transmit end periodically sends an optical pulse signal having a predetermined code pattern, a primary pulse signal in a digital electrical signal sequence obtained through sampling in one period is, for example, a signal with a maximum amplitude in the digital electrical signal sequence in the period.

Because the optical signal generated by the transmit end through the optical module is less affected by events such as attenuation, scattering, and multipath propagation than the derivative tail signal, the primary pulse signal obtained after the optical signal generated by the optical module is sampled has the maximum amplitude in the digital electrical signal sequence. Therefore, the receive end can accurately distinguish between the primary pulse signal and the secondary pulse signal based on an amplitude of each signal in the digital electrical signal sequence, thereby helping determine a location feature of a reflection point by comparing a parameter difference between the primary pulse signal and the secondary pulse signal.

The secondary pulse signal corresponds to the derivative tail signal, and the secondary pulse signal is a signal generated by performing optical-to-electrical conversion and sampling on an optical signal generated through reflection at a location of a reflection point. The secondary pulse signal is a signal that is arranged after the primary pulse signal in the digital electrical signal sequence obtained by the receive end through sampling. For example, a location of the secondary pulse signal is a coordinate of the location of the secondary pulse signal on the time axis. That the secondary pulse signal is arranged after the primary pulse signal also indicates that the secondary pulse signal appears later than the primary pulse signal in the digital electrical signal sequence obtained by the receive end through sampling. For example, the secondary pulse signal is a signal at a non-earliest receiving time point in the digital electrical signal sequence obtained by the receive end through sampling. For example, when the transmit end periodically sends an optical pulse signal having a predetermined code pattern, a secondary pulse signal in a digital electrical signal sequence obtained through sampling in one period is, for example, a pulse signal after a 1^{st} pulse signal in the digital electrical signal sequence in the period.

In some implementations, the secondary pulse signal is a signal with a non-maximum amplitude in the digital electrical signal sequence obtained by the receive end through sampling. An amplitude of the secondary pulse signal indicates an energy magnitude of the secondary pulse signal or strength of the secondary pulse signal. For example, the amplitude of the secondary pulse signal indicates a power of the secondary pulse signal. The strength of the secondary pulse signal is smaller than that of the primary pulse signal. For example, when signal strength is used as a vertical axis for signal analysis, the amplitude (vertical coordinate) of the secondary pulse signal is smaller than the amplitude (vertical coordinate) of the primary pulse signal. The power of the secondary pulse signal is smaller than that of the primary pulse signal.

A change of the secondary pulse signal relative to the primary pulse signal indicates a location feature of a reflection point that generates the secondary pulse signal. A distance between the secondary pulse signal and the primary pulse signal indicates a distance between the reflection point that generates the secondary pulse signal and a transmit-end device. A shorter distance between the reflection point and the transmit-end device indicates a shorter distance between the secondary pulse signal and the primary pulse signal. The location of the secondary pulse signal indicates a location of the reflection point that generates the secondary pulse signal in the optical fiber link. A distance between two secondary pulse signals indicates a distance between two reflection points that generate the two secondary pulse signals in the optical fiber link. A difference between location features of the two secondary pulse signals indicates a distance between two reflection points that generate location features of the two secondary pulse signals.

### (8) Location feature of a reflection point

The location feature of the reflection point is a parameter used to describe a location of the reflection point in an optical fiber link. In some implementations, the location feature of the reflection point represents a relative location of the reflection point. For example, the location feature of the reflection point indicates a distance between a location of the reflection point and a location of a transmit-end device. A scenario shown in FIG. 1 is used as an example. A location feature of a reflection point 1 (a reflection point corresponding to a port a3 of an optical cable connector A) indicates a distance between a physical location of the port a3 of the optical cable connector A and a physical location of a first network device. For another example, the location feature of the reflection point indicates a distance between the location of the reflection point and a location of a receive-end device. For another example, the location feature of the reflection point indicates a distance between the location of the reflection point and another reflection point.

The location feature of the reflection point helps locate, to some extent, a location at which an optical signal is reflected during transmission through an optical fiber link, thereby helping estimate a location of an optical cable connector in the optical fiber link. In some implementations of this application, the location feature of the reflection point is mainly used for co-cable detection. Location features of reflection points in different optical fiber links can be used as a basis for determining whether the different optical fiber links share a same optical cable section. If location features of reflection points in two optical fiber links match, it can be determined that there is a risk that the two optical fiber links share a same optical cable section. Specifically, a cause of a reflection point is related to an optical cable connector. Generally, a reflection point is very likely to be generated at a location at which an optical fiber link is connected to a port of an optical cable connector. Therefore, if location features of all reflection points in two optical fiber links are the same, it indicates that the two optical fiber links may pass through a same optical cable connector, causing a co-cable risk.

In some implementations, the location feature of the reflection point is determined based on a parameter of a primary pulse signal and a parameter of a secondary pulse signal. For example, the location feature of the reflection point is obtained by comparing the parameter of the primary pulse signal with the parameter of the secondary pulse signal. Because the secondary pulse signal is generated due to reflection of the reflection point, a result of comparison between the parameter of the primary pulse signal and the parameter of the secondary pulse signal can be used as the location feature of the reflection point.

When there are n reflection points in an optical fiber link, and a digital electrical signal sequence obtained through sampling includes n secondary pulse signals, in some implementations, location features of the n reflection points are determined based on a parameter of a primary pulse signal and a parameter of each of the n secondary pulse signals. For example, a location feature of a 1^{st} reflection point (a reflection point that is closest to a transmit end) in the optical fiber link is determined based on the parameter of the primary pulse signal and a parameter of a 1^{st} secondary pulse signal (a secondary pulse signal that is obtained by a receive end through first sampling other than the primary pulse signal) in the n secondary pulse signals. For another example, a location feature of a 2^{nd} reflection point (a reflection point that is second closest to the transmit end) in the optical fiber link is determined based on the parameter of the primary pulse signal and a parameter of a 2^{nd} secondary pulse signal in the n secondary pulse signals.

In some implementations, the location feature of the reflection point is obtained by comparing a location of the primary pulse signal with a location of the secondary pulse signal. For example, the location feature of the reflection point includes a distance between the location of the primary pulse signal and the location of the secondary pulse signal.

In some implementations, the location feature of the reflection point includes a time domain dimension feature. For example, when a time axis is used as a horizontal axis, the location feature of the reflection point is a horizontal axis dimension feature. For example, the location of the primary pulse signal indicates a time at which a receive-end service chip receives the primary pulse signal (or a time at which a receive-end optical module obtains the primary pulse signal through sampling). A location feature of the secondary pulse signal indicates a time at which the receive-end service chip of the secondary pulse signal receives the secondary pulse signal (or a time at which the receive-end optical module obtains the secondary pulse signal through sampling). The location feature of the reflection point indicates a time difference between the time at which the receive-end service chip receives the primary pulse signal and the time at which the receive-end service chip receives the secondary pulse signal, or a time difference between the time at which the receive-end optical module obtains the primary pulse signal through sampling and the time at which the receive-end optical module obtains the secondary pulse signal through sampling. A shorter distance between a reflection point and the transmit end indicates a shorter distance between a secondary pulse signal corresponding to the reflection point and the primary pulse signal in a time dimension. Therefore, a location feature of the reflection point corresponding to the secondary pulse signal can be determined by comparing the secondary pulse signal with the primary pulse signal.

When there are n reflection points in an optical fiber link, and a digital electrical signal sequence obtained through sampling includes n secondary pulse signals, in some implementations, location features of the n reflection points are determined based on a location of a primary pulse signal and a location of each of the n secondary pulse signals.

For example, a location feature of a 1^{st} reflection point (a reflection point that is closest to a transmit end) in the optical fiber link is determined based on the location of the primary pulse signal and a location of a 1^{st} secondary pulse signal in the n secondary pulse signals. For example, the location feature of the 1^{st} reflection point in the optical fiber link is a distance between the location of the primary pulse signal and the location of the 1^{st} secondary pulse signal in the n secondary pulse signals. For example, a location feature of a 2^{nd} reflection point (a reflection point that is second closest to the transmit end) in the optical fiber link is determined based on the location of the primary pulse signal and a location of a 2^{nd} secondary pulse signal in the n secondary pulse signals. For example, the location feature of the 2^{nd} reflection point in the optical fiber link is a distance between the location of the primary pulse signal and the location of the 2^{nd} secondary pulse signal in the n secondary pulse signals. The rest may be deduced by analogy.

For example, when a location of a pulse signal is an arrival time point of the pulse signal (or a time point at which the optical module obtains the pulse signal through sampling), a location feature of an i^{th} reflection point in the optical fiber link is a time difference between an arrival time point (or a sampling time point) of the primary pulse signal and an arrival time point of an i^{th} secondary pulse signal (a secondary pulse signal that arrives at the receive end earliest other than the primary pulse signal) in the n secondary pulse signals (or a time point at which the optical module obtains the pulse signal through sampling).

In some implementations, the location feature of the reflection point includes signal strength (also referred to as an amplitude or signal energy, for example, a power, a current, or a voltage) feature dimension. For example, when signal energy is used as a horizontal axis, the location feature of the reflection point is a vertical axis dimension feature. For example, the location feature of the reflection point includes a distance between an amplitude of the primary pulse signal and an amplitude of a secondary pulse signal corresponding to the reflection point, the amplitude of the primary pulse signal indicates a power of the primary pulse signal, and the amplitude of the secondary pulse signal indicates a power of the secondary pulse signal. The location feature of the reflection point includes a strength difference between strength of the primary pulse signal obtained by the receive end through sampling and strength of the secondary pulse signal obtained by the receive end through sampling. A shorter distance between a reflection point and the transmit end indicates a shorter distance between a secondary pulse signal corresponding to the reflection point and the primary pulse signal in a signal strength dimension. Therefore, a location feature of the reflection point corresponding to the secondary pulse signal can be determined by comparing the secondary pulse signal with the primary pulse signal.

In some implementations, the location feature of the reflection point includes a time domain dimension feature and a signal strength dimension feature. For example, the location feature of the reflection point includes a distance between an amplitude of the primary pulse signal and an amplitude of a secondary pulse signal corresponding to the reflection point, and a distance between a location (an arrival time point or a sampling time point) of the primary pulse signal and a location (an arrival time point or a sampling time point) of the secondary pulse signal corresponding to the reflection point.

The time domain dimension feature and the signal strength dimension feature complement each other and are mutually referenced. If two optical fiber links have reflection points at a same location, time domain dimension features of the reflection points that are obtained from two optical signals transmitted on the two optical fiber links are very likely to be the same, and signal strength dimension features of the reflection points that are obtained from the two optical signals transmitted on the two optical fiber links are also very likely to be the same. Therefore, if the receive end determines the location feature of the reflection point by using both the time domain dimension feature and the signal strength dimension feature, accuracy of the location feature of the reflection point is higher, reducing a risk of misjudgment by the receive end caused when only one dimension is referenced due to a plurality of reflections on the optical fiber link.

In still some implementations, the location feature of the reflection point is a physical location of the reflection point. The physical location of the reflection point is determined based on a transmission speed of light, a parameter of a primary pulse signal, a parameter of a secondary pulse signal, and a physical location of the transmit-end device.

### (9) Sampling

Sampling in embodiments is a process of converting an analog electrical signal into a digital electrical signal. The sampling process is, for example, quantizing an analog electrical signal, to convert the analog electrical signal into a digital electrical signal. Optionally, the sampling process is performing binarization processing on an analog electrical signal, to convert the analog electrical signal into a digital electrical signal including 0 and 1.

### (10) Sampling frequency

The sampling frequency is also referred to as a sampling rate or a sampling ratio. The sampling frequency indicates a quantity of sampling times per second. The sampling frequency is in a unit of, for example, Hertz (Hz). In embodiments, the sampling frequency is a parameter on which an analog-to-digital conversion process is based, and the sampling frequency is a frequency at which an analog signal is sampled when the analog signal is converted into a digital signal. According to the Nyquist (Nyquist) sampling theorem, the sampling frequency needs to be greater than twice a highest frequency in a signal to reduce a sampling error and information loss. A higher sampling frequency indicates that a form and details of an original analog signal can be more accurately restored. For example, sampling an analog electrical signal at a sampling frequency of 10 MHz means sampling the analog electrical signal 10 million times per second, that is, obtaining 10 million sampling points per second for subsequent signal analysis.

### (11) Pulse width

A pulse width of a pulse signal indicates duration of the pulse signal. The pulse width of the pulse signal is usually represented by time. The pulse width of the pulse signal is in a unit of, for example, second (s), millisecond (ms), or microsecond (µs). For example, the pulse width includes at least one of high-level duration and low-level duration. The high-level duration is duration of a high level in a pulse signal. For example, if high-level duration of a pulse signal is 2 µs, a high level of the pulse signal lasts for 2 µs in each pulse period. The low-level duration is duration of a low level in a pulse signal. For example, if low-level duration of a pulse signal is 2 µs, a low level of the pulse signal lasts for 2 µs in each pulse period.

### (12) Pulse period (Pulse Period)

The pulse period indicates a time interval between two adjacent pulses. The pulse period is, for example, a time interval between a start time point of a pulse signal and an end time point of the pulse signal. The pulse period is usually represented by time. The pulse period is in a unit of, for example, second, millisecond, or microsecond. The pulse period is also referred to as pulse period duration (PRI). For example, if a time interval between a start time point and an end time point of a pulse signal is 10 microseconds, pulse period duration is 10 microseconds.

### (13) Peak amplitude

The peak amplitude is a maximum amplitude value of a pulse signal in one period. For example, a peak amplitude of an electrical pulse signal is a maximum voltage value or a maximum current value of the electrical pulse signal in one period. A peak amplitude of an optical pulse signal is a maximum optical power of the optical pulse signal in one period.

### (14) Valley amplitude

The valley amplitude is a minimum amplitude value of a pulse signal in one period. For example, a valley amplitude of an electrical pulse signal is a minimum voltage value or a minimum current value of the electrical pulse signal in one period. A valley amplitude of an optical pulse signal is a minimum optical power of the optical pulse signal in one period.

### (15) Signal frequency

The signal frequency is a quantity of times that a pulse signal repeatedly appears in a unit time. The pulse signal frequency is usually in a unit of Hertz (Hz). For example, if a pulse signal repeatedly appears 10 times per second, a frequency of the pulse signal is 10 Hz.

### (16) Duty cycle (PW/PRI)

The duty cycle indicates a ratio of high-level duration (PW) in a pulse signal to a pulse period (PRI). The duty cycle indicates a ratio of a high-level signal (pulse width) to a complete pulse period. The duty cycle is usually expressed in a percentage or fraction form. For example, if high-level duration of a pulse signal is 1 microsecond (PW), and a pulse period of the pulse signal is 10 microseconds (PRI), a duty cycle of the pulse signal is 1/10 = 0.1.

### (17) Optical power

The optical power is a power of an optical signal, and the optical power is also referred to as strength of the optical signal. The optical power may also be understood as a rate at which energy of an optical signal is transmitted in a unit time. The optical power is in a unit of, for example, watt (W).

### (18) Optical fiber link

The optical fiber link is a communication path established based on an optical fiber. The optical fiber is a fiber made of glass or plastic. The optical fiber can be used as an optical transmission tool to transmit a signal between devices.

### (19) Optical cable

The optical cable is a cable used to implement optical fiber communication. The optical cable transmits an optical signal through an optical fiber inside the optical cable to implement optical signal communication. One optical cable section includes one or more optical fibers. For example, the optical cable includes a protection tube, and a plurality of optical fibers are wrapped inside the protection tube. In addition, optionally, other components such as a filler and a power cable are further disposed inside the optical cable.

### (20) Optical cable connector

The optical cable connector is a device configured to connect optical cables. The optical cable connector is, for example, an optical switching box, an optical distribution frame (optical distribution frame, ODF), or a cable junction box. The optical cable connector is deployed between an optical module connected to a transmit-end device and an optical module connected to a receive end. The optical cable connector provides a connection point of an optical cable, facilitating cabling in an optical communication network.

### (21) Optical distribution frame (optical distribution frame, ODF)

The ODF is a device configured to organize, manage, and connect optical fibers in an optical communication network. The ODF provides a physical interface for centralized management of optical fiber connections, facilitating optical fiber cabling and maintenance. The ODF mainly includes a frame, an optical fiber interface slot, a connector, a cable distribution unit, and a label.

### (22) Optical switching box

The optical switching box is also referred to as a fiber distribution terminal. The optical switching box is a passive device. The optical switching box mainly includes a plurality of connectors. The optical switching box is configured to connect and distribute optical fibers. The optical switching box is deployed, so that optical fibers connected to network devices in equipment rooms can be sorted or summarized, facilitating optical fiber management and also simplifying optical fiber layout. The optical switching box is usually installed outdoors to protect an optical fiber connection point and distribute an optical fiber signal to different devices.

### (23) Optical module

The optical module is a hardware module configured to implement electrical-to-optical conversion and/or optical-to-electrical conversion. For example, in a process in which a transmit-end network device sends data, a service chip configured on the transmit-end network device generates an electrical signal, an optical module configured on the transmit-end network device performs electrical-to-optical conversion on the electrical signal to generate an optical signal, and the optical module configured on the transmit-end network device sends the optical signal through an optical cable. In a process in which a receive-end network device sends data, an optical module configured on the receive-end network device receives an optical signal through an optical cable, the optical module configured on the receive-end network device performs optical-to-electrical conversion on the optical signal to generate an electrical signal, and a service chip configured on the receive-end network device receives the electrical signal.

In some implementations, the optical module is disposed outside a housing of a network device. For example, the optical module is pluggable, and the optical module is inserted into an electrical interface on a surface of the housing of the network device, to be electrically connected to a service chip inside the network device.

In some implementations, the optical module is disposed inside a housing of a network device. For example, the optical module is integrated on a mainboard of the network device.

A size of the optical module usually complies with a standard encapsulation mode. An optical module with a small size is usually basically equal to a finger, and an optical module with a large size is usually equal to a mobile phone. The optical module mainly includes an electrical interface, an electrical-to-optical converter, an optical-to-electrical converter, and an optical interface.

### (24) Electrical interface of an optical module

The electrical interface is an interface configured to transmit an electrical signal. The electrical interface is also referred to as a system-side interface or an electrical port. The electrical interface of the optical module is connected to a mainboard of a network device. The electrical interface is, for example, a serializer/deserializer (serializer/deserializer, SerDes) interface. The electrical interface includes one or more pairs of serialized lanes (lane), and each pair of lanes includes one receive lane and one transmit lane. Each pair of lanes includes one SerDes for sending and one SerDes for receiving. In some implementations, the electrical interface includes an electrical port connector, the electrical port connector has a plurality of pins, and each pin is configured to provide a transmission channel for one electrical signal.

### (25) Optical interface of an optical module

The optical interface is an interface configured to transmit an optical signal. The optical interface is also referred to as a line-side interface or an optical port. The optical interface of the optical module is connected to an optical cable. In some implementations, the optical interface includes an optical port connector, the optical port connector has a plurality of pins, and each pin is configured to provide a transmission channel for one optical signal. For example, the optical interface includes a duplex LC connector (Duplex LC Connector). The duplex LC connector is an optical fiber patch cord connector used for an optical fiber connection. The duplex LC connector includes two LC connectors that are connected to each other, one LC connector is configured to send an optical signal, and the other LC connector is configured to receive an optical signal.

### (26) Electrical-to-optical converter

The electrical-to-optical converter is also referred to as a transmitter optical sub-assembly (Transmitter Optical Sub-Assembly, TOSA) or an optical transmitter. The electrical-to-optical converter is hardware configured to perform electrical-to-optical conversion. The electrical-to-optical converter is specifically configured to receive an electrical signal through an input end of the electrical-to-optical converter and convert the electrical signal into an optical signal, and then an output end of the electrical-to-optical converter outputs the optical signal. The output end of the electrical-to-optical converter is usually connected to an optical interface, and the optical signal that is output by the electrical-to-optical converter can be sent to an optical cable through the optical interface. The electrical-to-optical converter includes a laser and a driver.

### (27) Laser

The laser is hardware that can generate an optical signal. For example, the laser receives an input electrical signal, and driven by a drive current, the laser generates an optical signal through electron-hole recombination radiation and effect of optical amplification. The laser is, for example, a laser diode (Laser Diode). For example, the laser is a direct-drive laser (Direct Modulated Laser, DML). For another example, the laser is an electro-absorption modulated laser (Electro-absorption Modulated Laser, EML). The DML can change a power of an output optical signal by adjusting a current that is input to the DML, thereby implementing optical signal modulation. The EML is another type of laser. The EML implements optical signal modulation by combining two functional units: a laser and a modulator. A modulator part of the EML uses an electro-absorption modulator (Electro-absorption Modulator), and adjusts strength of an output optical signal by changing a voltage or a current applied to the modulator.

### (28) Driver (Driver)

The driver (Driver) is hardware configured to drive a laser (Laser Diode). The driver is also referred to as a driver circuit (driver Circuit). The driver is configured to provide a drive electrical signal for the laser, to stimulate the laser to generate and output an optical signal. For example, an input end of the driver receives a control signal, the driver generates a drive signal based on the control signal, and an output end of the driver outputs the drive signal to an input end of the laser, so that an optical signal generated by the laser meets a requirement. The driver usually internally includes a power supply.

### (29) Optical-to-electrical converter of an optical module

The optical-to-electrical converter is also referred to as a receiver optical assembly (Receiver Optical Sub-Assembly, ROSA) or an optical receiver. The optical-to-electrical converter is hardware configured to perform optical-to-electrical conversion. The optical-to-electrical converter is located at an end that is of a receive-end optical module and that is close to an optical interface. The optical-to-electrical converter is specifically configured to receive an optical signal through an input end of the optical-to-electrical converter and convert the optical signal into an electrical signal, and then an output end of the optical-to-electrical converter outputs the electrical signal. The input end of the optical-to-electrical converter is usually connected to an optical interface. An optical signal received by the optical interface from an optical cable can be input to the input end of the optical-to-electrical converter.

### (30) Optical digital signal processor (Optical digital signal processor, oDSP)

The oDSP is a chip inside an optical module for digital signal processing and modulation format conversion. The oDSP generally supports a plurality of functions for processing a digital electrical signal. For example, the oDSP is configured to perform digital signal encoding, digital signal decoding, digital signal filtering, or clock recovery. The oDSP internally includes a coding unit, and the coding unit is configured to code a digital signal.

### (31) Network device

The network device is also referred to as a communication device, a host, or a forwarding device. The network device is, for example, a device configured to forward a packet. For example, the network device is a router, a switch, or a firewall. For another example, the network device is a network element in an optical communication network, such as an optical network termination (optical network termination, ONT), a multiplexer unit (multiplexer unit, MXU), an optical line termination (optical Line Termination, OLT), a switch, or a router. For another example, the network device is a general-purpose computer device. The network device includes a mainboard.

### (32) Mainboard

The mainboard is also referred to as a board or a service board. The mainboard is equivalent to a platform for transmitting an electrical signal between various types of hardware in a network device, and the mainboard is configured to connect the various types of hardware inside the network device, so that the various types of hardware inside the network device can be integrated together. For example, the mainboard includes a printed circuit board (Printed Circuit Board, PCB) and hardware such as a service chip, a memory, and an electrical interface disposed on the PCB. These types of hardware are connected through a copper wire laid on the PCB, and transmit an electrical signal through the PCB.

### (33) Service chip

The service chip is a chip configured to process service data. The service chip includes a processor. For example, the service chip includes a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the solutions of this application. For example, the service chip includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field programmable gate array (field programmable gate array, FPGA), a generic array logic (generic array logic, GAL), or any combination thereof.

### (34) Analog-to-digital converter (Analog-to-Digital Converter, ADC)

The analog-to-digital converter is also referred to as an ADC unit. The analog-to-digital converter is an execution body of sampling. An input end of the analog-to-digital converter receives an input analog electrical signal, and the analog-to-digital converter samples the input analog electrical signal to obtain a digital electrical signal. An output end of the analog-to-digital converter outputs the digital electrical signal.

### (35) Optical communication network

The optical communication network includes but is not limited to an optical transport network (optical transport network, OTN), an optical access network (optical access network, OAN), a synchronous digital hierarchy (synchronous digital hierarchy, SDH), a passive optical network (passive optical network, PON), an Ethernet (Ethernet), a flexible Ethernet (flex Ethernet, FlexE), a wavelength division multiplexing (wavelength division multiplexing, WDM) network, and the like.

### (36) Analysis device

The analysis device is a device configured to analyze whether different optical fiber links share a same optical cable section. The analysis device is communicatively connected to a receive-end device of each of a plurality of optical fiber links. The analysis device is configured to receive location information of a reflection point of the receive-end device of each of the plurality of optical fiber links, and determine, depending on whether location information of reflection points of receive-end devices of different optical fiber links matches, whether different optical fiber links are co-cable.

In some implementations, the analysis device is integrated into a controller, a network management device, or another network element of a communication system. For example, the analysis device is a software-defined networking (software-defined networking, SDN) controller or a path computation element (path computation element, PCE). For another example, the analysis device is a network element in an optical communication network. For another example, the analysis device is a general-purpose computer device. For example, the analysis device is a server or a terminal. In some other implementations, the analysis device is a device that exists independently in a communication system and that is dedicated to analyzing whether devices are co-cable.

In some implementations, a network device and the analysis device are co-located, and the network device and the analysis device are integrated into a same physical device. In some implementations of this application, a procedure is described by using an example in which the network device and the analysis device are separately deployed. When the network device and the analysis device are co-located, a step performed by the network device and a step performed by the analysis device are both performed by a device integrated by the network device and the analysis device. For example, when the analysis device is integrated into the network device, a step performed by the analysis device is actually performed by the network device.

In some implementations, when the network device and the analysis device are separately deployed, the network device and the analysis device are different physical devices that communicate with each other. For example, the network device is disposed in a general-purpose network device such as a router, a switch, or a firewall or a special-purpose network device, the analysis device is disposed in a server that communicates with the network device, and the server implements a function of the analysis device by running software that supports control and management plane functions.

Optionally, the analysis device includes a plurality of devices that cooperatively work. Alternatively, the analysis device is a separate device.

### (37) Bias current of a laser

The bias current of the laser is a stable direct current that points to a laser input. A magnitude of the bias current can control an output optical power of the laser. For example, when the bias current of the laser increases, the output optical power of the laser increases. When the bias current of the laser increases, the output optical power of the laser decreases.

### (38) Modulation curve of a laser

The modulation curve of the laser is also referred to as a response characteristic curve of the laser or an output characteristic curve of the laser. The modulation curve of the laser indicates a correspondence between an output optical power of the laser and an input electrical signal (for example, a bias current) of the laser. The modulation curve of the laser describes how the output optical power of the laser varies with a change in the input electrical signal of the laser. For example, the modulation curve of the laser describes a correspondence between the output optical power of the laser and an input current value of the laser. For another example, the modulation curve of the laser describes a correspondence between the output optical power of the laser and an input voltage value of the laser. In some implementations, the modulation curve of the laser is a linear curve. When the input electrical signal of the laser changes linearly, the output optical power of the laser also changes linearly. For example, when the input electrical signal of the laser increases from 0 mA to 1 mA, the output optical power of the laser accordingly increases from 0 mW to 10 mW. In some other implementations, the modulation curve of the laser is a non-linear curve.

### (39) Modulation curve of a driver

The modulation curve of the driver is also referred to as a response characteristic curve of the driver or an output characteristic curve of the driver. The modulation curve of the driver indicates a relationship between an output electrical signal of the driver and an input control signal of the driver. The modulation curve of the driver describes how an output optical power of the driver varies with a change in an input electrical signal of the driver. For example, the modulation curve of the driver describes a correspondence between the output optical power of the driver and an input current value of the driver. For another example, the modulation curve of the driver describes a correspondence between the output optical power of the driver and an input voltage value of the driver. In some implementations, the modulation curve of the driver is a linear curve. When the input electrical signal of the driver changes linearly, the output optical power of the driver also changes linearly. For example, when a control voltage signal that is input to the driver increases from 0 V to 2 V, an output electrical signal of the driver also changes from 0 V to 4 V. In some other implementations, the modulation curve of the driver is a non-linear curve.

### (40) 100G LR1 optical module

The 100G LR1 optical module is an optical module that supports a transmission rate of 100 gigabits per second (transmission of 10 billion bits per second). The 100G LR1 optical module usually uses a single wavelength (one laser). The 100G LR1 optical module usually uses a pulse amplitude modulation 4-level (Pulse Amplitude Modulation 4-Level, PAM4) modulation format.

### (41) 100G LR4 optical module

The 100G LR4 optical module is an optical module that supports a transmission rate of 100 G. The 100G LR4 optical module usually uses a laser with four wavelengths. The 100G LR4 optical module usually uses an NRZ modulation format. For example, the 100G LR4 optical module includes an electrical port connector, a power supply (Power Supplies), a clock and data recovery (Clock and Data Recovery, CDR) or limiting amplifier (Limiting Amplifier), a monitor/controller (Monitoring/Control), a CDR or equalizer (Equalizer), a laser diode driver (Laser Diode Driver, LDD), a laser, an optical multiplexer (optical mux), a duplex LC connector (Duplex LC Connector), and an optical splitter (optical demux).

The following describes an application scenario of embodiments of this application by using an example.

Embodiments of this application are applied to a scenario in which two network devices provided with optical modules are connected through an optical cable to implement optical fiber communication. Generally, a length of an optical cable section is limited, and as a transmission distance increases, a size and a weight of the optical cable also increase. Therefore, it is usually difficult to implement signal transmission between network devices that are far away through only one optical cable section. In view of this, a plurality of optical cable sections are connected to extend a length of an optical fiber link, thereby implementing end-to-end optical fiber communication.

In a process of connecting a plurality of optical cable sections, a function of an optical cable connector is important. The optical cable connector is configured to connect different optical cable sections. The optical cable connector is, for example, an optical switching box, an ODF, or a cable junction box. The optical cable connector is deployed between an optical module connected to a transmit-end device and an optical module connected to a receive end. A plurality of optical cable sections between the optical module connected to the transmit-end device and the optical module connected to the receive end are interconnected through the optical cable connector, so that the plurality of optical cable sections form an entirety, thereby implementing an end-to-end optical fiber link. It may also be understood that an end-to-end optical fiber link between the transmit-end device and the receive-end device is divided into a plurality of optical cable sections through the optical cable connector.

For example, a first port of the optical cable connector is configured to connect k optical cable sections, and a second port of the optical cable connector is configured to connect m optical cable sections, where m is less than or equal to k. This is equivalent to that the optical cable connector aggregates the k optical cable sections into the m optical cable sections, thereby reducing a quantity of optical cable sections, improving neatness of cabling, and simplifying optical cable layout in a network. One optical cable section may be understood as a continuous section of optical cable between two connection points, and one optical cable section has no splicing point or connection point.

In a specific example of an application scenario in which a plurality of optical cable sections are interconnected by deploying an optical cable connector, FIG. 1 is a diagram of an architecture of a network system 10 according to an embodiment of this application. The network system 10 includes a first network device, a second network device, a third network device, and a fourth network device. Different network devices in the network system 10 each are connected to an optical module, to transmit an optical signal through the optical module. Optionally, the network system 10 is deployed in an optical communication network, and the first network device, the second network device, the third network device, and the fourth network device are all network elements in the optical communication network.

As shown in FIG. 1, the first network device is connected to a first optical module, the second network device is connected to a second optical module, the third network device is connected to a third optical module, the fourth network device is connected to a fourth optical module, the first optical module is connected to the second optical module through a first optical fiber link, and the third optical module is connected to the fourth optical module through a second optical fiber link.

An optical cable connector A and an optical cable connector B are deployed in the network system 10. The optical cable connector A is located between the first optical module and the second optical module, and the optical cable connector A is located between the third optical module and the fourth optical module. The optical cable connector B is located between the first optical module and the second optical module, and the optical cable connector B is located between the third optical module and the fourth optical module.

In the scenario shown in FIG. 1, the first network device communicates with the second network device through the first optical fiber link, and the third network device communicates with the fourth network device through the second optical fiber link. As shown in FIG. 1, the first optical fiber link sequentially passes through an optical cable section 1, an optical cable section 3, and an optical cable section 4. The first optical module is connected to a port a1 of the optical cable connector A through the optical cable section 1. The port a1 of the optical cable connector A is connected to the optical cable section 1, and a port a3 of the optical cable connector A is connected to the optical cable section 3. A port b3 of the optical cable connector A is connected to the optical cable section 3. A port b1 of the optical cable connector B is connected to the optical cable section 4. The optical cable section 4 is connected to the second optical module. The second optical fiber link sequentially passes through the optical cable section 2, the optical cable section 3, and the optical cable section 5. The third optical module is connected to a port a2 of the optical cable connector A through the optical cable section 2. The port a2 of the optical cable connector A is connected to the optical cable section 3, and the port a3 of the optical cable connector A is connected to the optical cable section 3. The port b3 of the optical cable connector A is connected to the optical cable section 3. A port b2 of the optical cable connector B is connected to the optical cable section 5. The optical cable section 5 is connected to the fourth optical module.

An optical cable section protects an optical fiber by wrapping the optical fiber. However, once the optical cable section is faulty (for example, is cut, bent, or squeezed), all optical fiber links in the optical cable section are faulty, causing deterioration of communication quality or even a disconnection.

Based on this, an active/standby protection mechanism is usually used to establish a plurality of optical fiber links between network devices, and the plurality of optical fiber links include an active optical fiber link and a standby optical fiber link. The standby optical fiber link is equivalent to backup of the active optical fiber link. The standby optical fiber link is used to protect the active optical fiber link. When the active optical fiber link is faulty, for example, an optical fiber disconnection is caused in the active optical fiber link due to construction, a rapid switch to the standby optical fiber link improves communication reliability and reduces a service data transmission failure caused by a fault of a single optical fiber link.

However, in an optical fiber laying process, the active optical fiber link and the standby optical fiber link are often co-cable. For example, the active optical fiber link and the standby optical fiber link are located in a same channel or even in a same optical cable section. For example, in the scenario shown in FIG. 1, both the first optical fiber link and the second optical fiber link pass through the optical cable section 3. In other words, the optical cable section 3 is an optical cable section shared by the first optical fiber link and the second optical fiber link.

That the active optical fiber link and the standby optical fiber link are co-cable is equivalent to "fake active/standby", that is, there is no backup protection mechanism for effective protection. Specifically, if an optical cable section shared by the active optical fiber link and the standby optical fiber link is faulty, for example, is cut, bent, or squeezed, both the active optical fiber link and the standby optical fiber link are disconnected and fail. In other words, each optical cable section that the active optical fiber link passes through and each optical cable section that the standby optical fiber link passes through need to be independent of each other, to implement backup protection.

For example, in FIG. 1, the first optical fiber link is, for example, an active optical fiber link, and the second optical fiber link is, for example, a standby optical fiber link. However, if the optical cable section 3 in FIG. 1 is cut, both the first optical fiber link and the second optical fiber link are disconnected, and a service transmitted on the first optical fiber link cannot be switched to the second optical fiber link, causing a failure of a backup protection function.

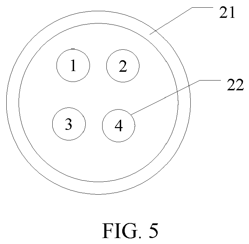

For example, FIG. 5 is a diagram of an example structure of a cross section of an optical cable. The optical cable shown in FIG. 5 includes a protection tube 21, and four optical fibers 22, namely, an optical fiber 1, an optical fiber 2, an optical fiber 3, and an optical fiber 4 in FIG. 5, are wrapped inside the protection tube 21. Optionally, other components such as a filler and a power cable are further disposed inside the optical cable. The optical cable section 3 in FIG. 1 has, for example, the structure shown in FIG. 5. The first optical fiber link in FIG. 1 includes the optical fiber 1 in the optical fibers 22 in FIG. 5, and the second optical fiber link in FIG. 1 includes the optical fiber 2 in the optical fibers 22 in FIG. 5. If the protection tube 21 in the optical cable shown in FIG. 5 is cut, all links constructed by the four optical fibers in the protection tube 21 are disconnected.

It can be learned that detecting whether different optical fiber links share a same optical cable section (referred to as co-cable detection below) is very important for network communication. Many network operators expect to use devices to automatically perform co-cable detection, to take corresponding measures in advance based on detection results.

However, if co-cable detection is performed by relying on OTDR, because an optical module serving as a transmit end needs to receive a reflected signal and perform a series of signal processing such as separation and sampling on the reflected signal, additional components (such as an MCU, an MCM, a DRV, a ROSA, and a filter) for processing the reflected signal need to be disposed in the optical module. These additional components cause high overall power consumption of the optical module. In addition, these additional components also cause high costs of the optical module, occupy too much space in the optical module, and adversely affect heat dissipation and energy saving of the optical module.

In view of this, in some implementations of this application, a transmit end performs signal modulation to obtain an optical signal having a predetermined code pattern; the transmit end sends the optical signal having the predetermined code pattern; and a receive end determines a location feature of a reflection point based on the received optical signal. Location features of reflection points in two optical fiber links can be compared to determine a co-cable risk of the two optical fiber links. This manner of implementing co-cable detection based on a location feature of a reflection point that is determined by a receive end may also be briefly referred to as an optical time domain analysis (optical time domain analysis, OTDA) manner.

For example, in the scenario shown in FIG. 1, the first network device and/or the first optical module, for example, serve/serves as a transmit end, and the second network device and/or the second optical module, for example, serve/serves as a receive end. The first optical module sends an optical pulse signal having a predetermined code pattern through the first optical fiber link, and the second network device and/or the second optical module obtain/obtains a location feature of a reflection point in the first optical fiber link based on the signal received from the first optical fiber link. Similarly, the third network device and/or the third optical module, for example, serve/serves as a transmit end, and the fourth network device and/or the fourth optical module, for example, serve/serves as a receive end. The third optical module sends an optical pulse signal having a predetermined code pattern through the second optical fiber link, and the fourth network device and/or the fourth optical module obtain/obtains a location feature of a reflection point in the second optical fiber link based on the signal received from the second optical fiber link. If a location feature of a reflection point corresponding to the port a3 in the first optical fiber link is the same as a location feature of a reflection point corresponding to the port a3 in the second optical fiber link, and a location feature of a reflection point corresponding to the port b3 in the first optical fiber link is the same as a location feature of a reflection point corresponding to the port b3 in the second optical fiber link, it can be determined that the first optical fiber link and the second optical fiber link have a co-cable risk. This is equivalent to identifying that both the first optical fiber link and the second optical fiber link pass through the optical cable section 3.

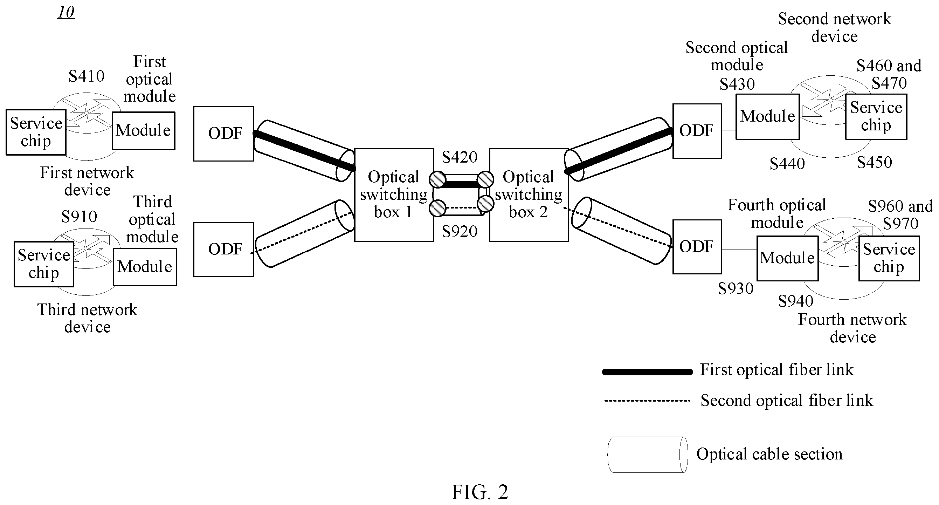

FIG. 2 is a diagram of another architecture of a network system 10 according to an embodiment of this application. The network system 10 shown in FIG. 2 is a specific example of the network system 10 shown in FIG. 1. An optical switching box 1 in FIG. 2 is a specific example of the optical cable connector A in FIG. 1, and an optical switching box 2 in FIG. 2 is a specific example of the optical cable connector B in FIG. 1. A location feature of a reflection point generated at a junction with the optical switching box 1 in the first optical fiber link, a location feature of a reflection point generated at a junction with the optical switching box 2 in the first optical fiber link, a location feature of a reflection point generated at a junction with the optical switching box 1 in the second optical fiber link, and a location feature of a reflection point generated at a junction with the optical switching box 2 in the second optical fiber link can be used as a basis for determining whether the first optical fiber link and the second optical fiber link share a same optical cable section. If the location feature of the reflection point generated at the junction with the optical switching box 1 in the first optical fiber link is the same as the location feature of the reflection point generated at the junction with the optical switching box 1 in the second optical fiber link, and the location feature of the reflection point generated at the junction with the optical switching box 2 in the first optical fiber link is the same as the location feature of the reflection point generated at the junction with the optical switching box 2 in the second optical fiber link, it can be determined that there is a risk that the first optical fiber link and the second optical fiber link share the same optical cable section.

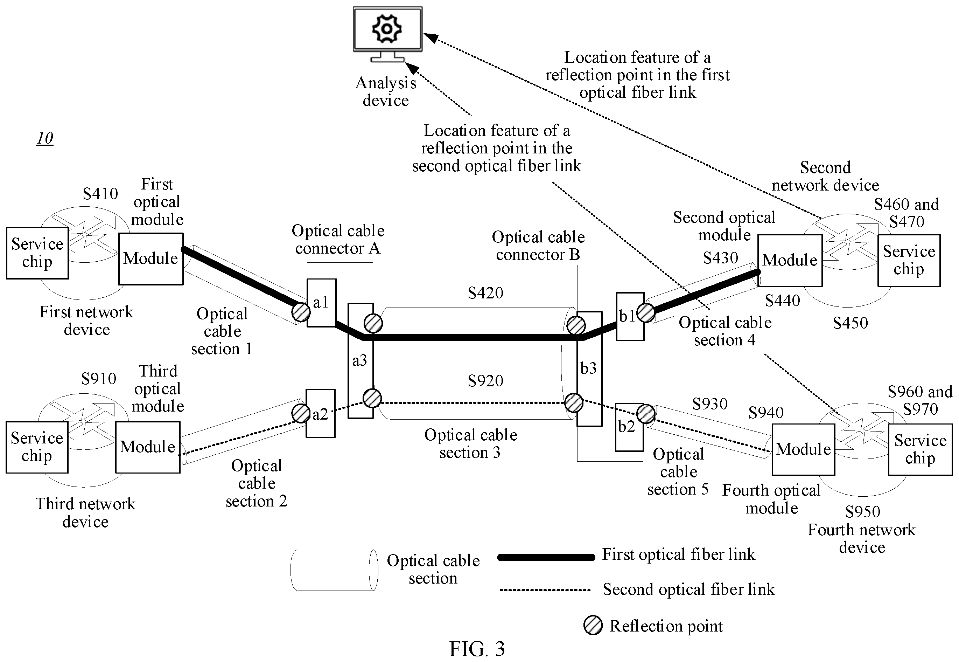

FIG. 3 is a diagram of another architecture of a network system 10 according to an embodiment of this application. Based on the network system 10 shown in FIG. 1, an analysis device is further deployed in the network system 10 shown in FIG. 3. The analysis device is separately communicatively connected to the second network device serving as a receive end and the fourth network device serving as a receive end. The analysis device is configured to receive a location feature of a reflection point in the first optical fiber link from the second network device and a location feature of a reflection point in the second optical fiber link from the fourth network device, and the analysis device determines, based on the location feature of the reflection point in the first optical fiber link and the location feature of the reflection point in the second optical fiber link, that the first optical fiber link and the second optical fiber link share a same optical cable section. In some other implementations, the analysis device and the second network device are co-located, and the second network device and the analysis device are integrated into a same physical device. For example, the second network device receives the location feature of the reflection point in the second optical fiber link from the fourth network device. The second network device determines, based on the location feature of the reflection point in the first optical fiber link that is determined by this device and the location feature of the reflection point in the second optical fiber link that is sent by the fourth network device, that the first optical fiber link and the second optical fiber link share the same optical cable section, to implement a function of the analysis device.

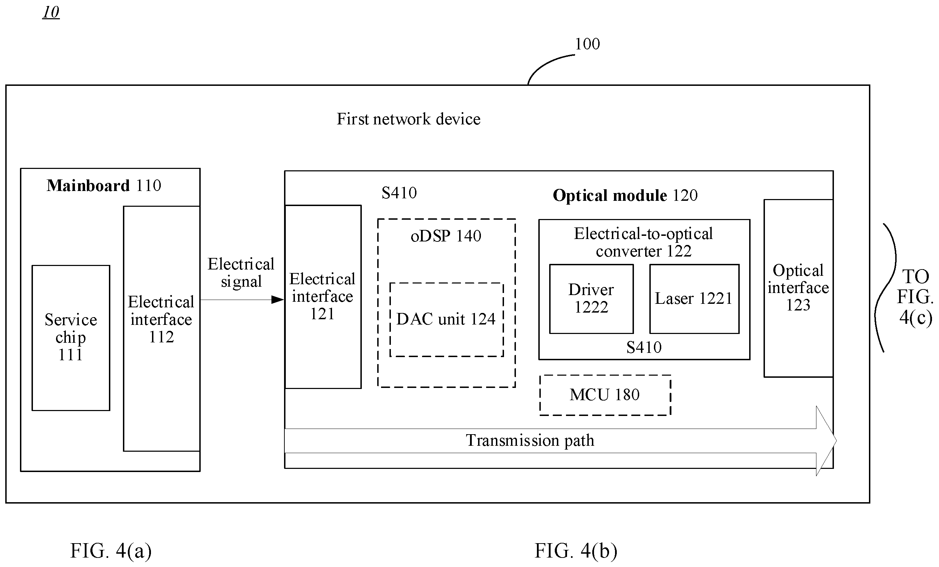

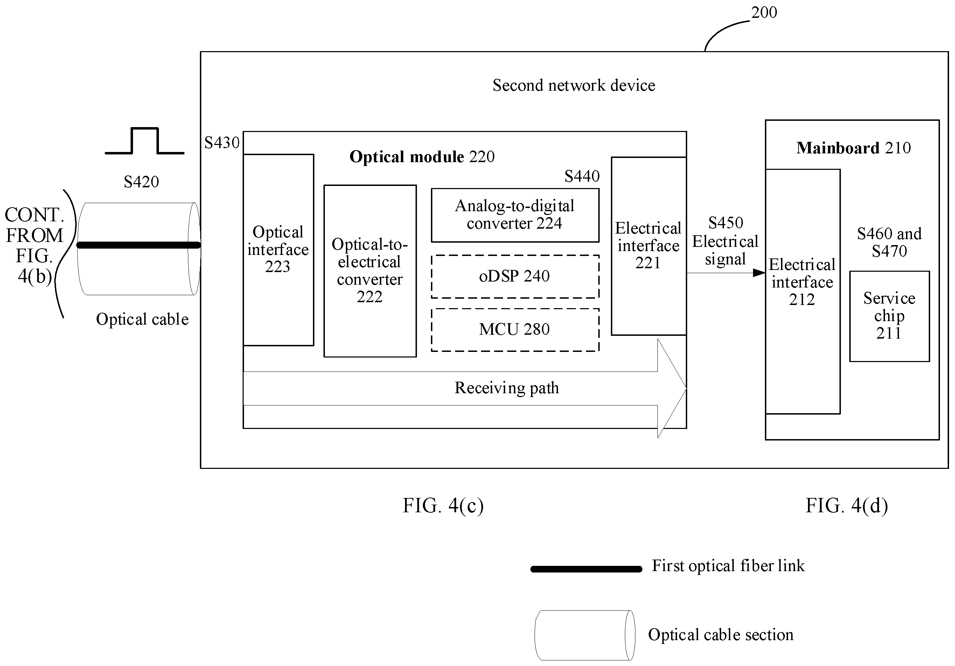

FIG. 4(a) to FIG. 4(d) are a diagram of a hardware structure applicable to a network system 10 according to an embodiment of this application. FIG. 4(a) is a diagram of a hardware structure of a transmit-end network device. The first network device and the third network device shown in FIG. 1 optionally have the structure shown in FIG. 4(a). FIG. 4(b) is a diagram of a hardware structure of a transmit-end optical module. The first optical module and the third optical module shown in FIG. 1 optionally have the structure shown in FIG. 4(b). FIG. 4(c) is a diagram of a hardware structure of a receive-end optical module. The second optical module and the fourth optical module shown in FIG. 1 optionally have the structure shown in FIG. 4(c). FIG. 4(d) is a diagram of a hardware structure of a receive-end network device. The second network device and the fourth network device shown in FIG. 1 optionally have the structure shown in FIG. 4(d).

For a separate function of each hardware component shown in FIG. 4(a) to FIG. 4(d), refer to the descriptions of the foregoing term explanation. The following focuses on a connection relationship and a function collaboration relationship between hardware components shown in FIG. 4(a) to FIG. 4(d).

The first network device 100 includes a mainboard 110 and an optical module 120.

The mainboard 110 is electrically connected to the optical module 120. The mainboard 110 includes a service chip 111 and an electrical interface 112. For example, the electrical interface 112 of the mainboard 110 is connected to an electrical interface 121 of the optical module 120. For example, the mainboard 110 includes one or more PCBs, and the service chip 111 and the electrical interface 112 are disposed on the PCB. In some implementations, the service chip 111 communicates with the optical module 120 by using an inter-integrated circuit (Inter-Integrated Circuit, IIC) protocol.

The optical module 120 includes the electrical interface 121, an electrical-to-optical converter 122, and an optical interface 123. The electrical interface 121, the electrical-to-optical converter 122, and the optical interface 123 are located on a transmission path of a same signal. In other words, when an electrical signal from the service chip 111 is input to the electrical interface 121, the electrical signal can be converted into an optical signal through the electrical-to-optical converter 122, so that the optical signal can be output to an optical cable through the optical interface 123. The electrical interface 121 of the optical module 120 is further connected to the electrical-to-optical converter 122.

An input end of the electrical-to-optical converter 122 is connected to the electrical interface 121. An output end of the electrical-to-optical converter 122 is connected to the optical interface 123. The electrical-to-optical converter 122 is configured to perform electrical-to-optical conversion on an electrical signal from the electrical interface 121 to obtain an optical signal, and output the optical signal to the optical interface 123. The electrical-to-optical converter 122 includes a laser 1221 and a driver 1222. The driver 1222 is configured to drive the laser 1221. The driver 1222 is configured to generate a drive electrical signal (for example, a drive current or a drive voltage), and input the drive electrical signal to the laser 1221, so that the laser 1221 generates an optical signal based on the drive electrical signal. An output end of the driver 1222 is connected to an input end of the laser 1221. An output end of the laser 1221 is connected to the optical interface 123.

The optical interface 123 is connected to the optical cable. The optical cable includes one or more optical cable sections. One optical cable section includes one or more optical fiber links. The optical interface 123 is configured to output an optical signal to the optical cable, and the optical signal is transmitted to a peer end through an optical fiber link in the optical cable.

In some implementations, the optical module 120 further includes a DAC unit 124. The DAC unit 124, the electrical interface 121, the electrical-to-optical converter 122, and the optical interface 123 are located on a transmission path of a same signal. The DAC unit 124 is configured to convert a digital electrical signal from the electrical interface 121 into an analog electrical signal, and output the analog electrical signal to the electrical-to-optical converter 122. An input end of the DAC unit 124 is connected to the electrical interface 121. An output end of the DAC unit 124 is connected to the electrical-to-optical converter 122.

In some implementations, the optical module 120 further includes an oDSP 140. The oDSP 140, the electrical interface 121, the electrical-to-optical converter 122, and the optical interface 123 are located on a transmission path of a same signal. The oDSP 140 is configured to perform digital signal processing and modulation format conversion on a digital electrical signal from the electrical interface 121, and output a processed digital electrical signal to the DAC unit 124.

In some implementations, the oDSP 140 is integrated with the DAC unit 124. For example, the DAC unit 124 is integrated inside the oDSP 140. In some other implementations, the oDSP 140 and the DAC unit 124 are separated from each other.

In some implementations, the optical module 120 further includes an MCU 180. The MCU 180 is configured to control each component in the optical module 120. For example, the MCU 180 is configured to provide a control signal for the driver 1222. The MCU 180 generates a control signal, and inputs the control signal to the driver 1222, so that the driver 1222 generates, under triggering of the control signal, a drive signal that meets a requirement. An output end of the MCU 180 is connected to an input end of the driver 1222.

The second network device 200 includes a mainboard 210 and an optical module 220.

The optical module 220 includes an optical interface 223, an electrical interface 221, an optical-to-electrical converter 222, and an analog-to-digital converter 224. The optical interface 223, the electrical interface 221, the optical-to-electrical converter 222, and the analog-to-digital converter 224 are located on a receiving path of a same signal.

The optical interface 223 is connected to an optical cable. The optical interface 223 is configured to receive an optical signal from an optical fiber link in the optical cable. The optical interface 223 is connected to an input end of the optical-to-electrical converter 222.

The optical-to-electrical converter 222 is configured to: receive an optical signal from the optical interface 223, perform optical-to-electrical conversion on the optical signal to obtain an analog electrical signal, and output the analog electrical signal. An output end of the optical-to-electrical converter 222 is connected to the analog-to-digital converter 224.

The analog-to-digital converter 224 is configured to receive an analog electrical signal from the optical-to-electrical converter 222, and perform analog-to-digital conversion on the analog electrical signal to obtain a digital electrical signal. An input end of the analog-to-digital converter 224 is connected to the optical-to-electrical converter 222. An output end of the analog-to-digital converter 224 is connected to the electrical interface 221.

The electrical interface 221 is electrically connected to the mainboard 210. The electrical interface 221 is configured to output a digital electrical signal to the mainboard 210.

Optionally, the optical module 220 further includes an MCU 280. The MCU 280 is configured to control each component in the optical module 220. For example, the MCU 280 is configured to provide a control signal for the analog-to-digital converter 224. The MCU 280 generates a control signal carrying a sampling frequency, and inputs the control signal carrying the sampling frequency to the analog-to-digital converter 224, so that the analog-to-digital converter 224 performs sampling based on the carried sampling frequency under triggering of the control signal. An output end of the MCU 280 is connected to the input end of the analog-to-digital converter 224.

Optionally, the optical module further includes an oDSP 240. In some implementations, the oDSP 240 is integrated with the analog-to-digital converter 224. For example, the analog-to-digital converter 224 is integrated inside the oDSP 240. In some other implementations, the oDSP 240 and the analog-to-digital converter 224 are separated from each other.

In some implementations, the MCU 280 is integrated with the analog-to-digital converter 224. For example, the analog-to-digital converter 224 is integrated inside the MCU 280. In some other implementations, the MCU 280 and the analog-to-digital converter 224 are separated from each other. The mainboard 210 includes a service chip 211 and an electrical interface 212. The electrical interface 212 is electrically connected to the electrical interface 221 of the optical module 220. The electrical interface 212 is configured to receive an electrical signal from the optical module 220. The service chip 211 is connected to the electrical interface 212. The service chip 211 is configured to process an electrical signal from the electrical interface 212.

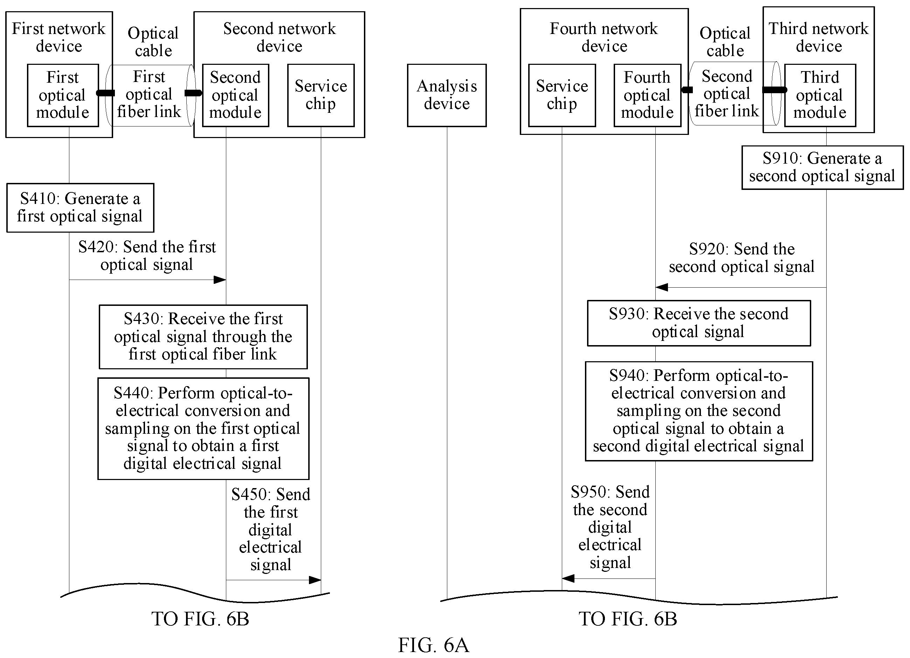

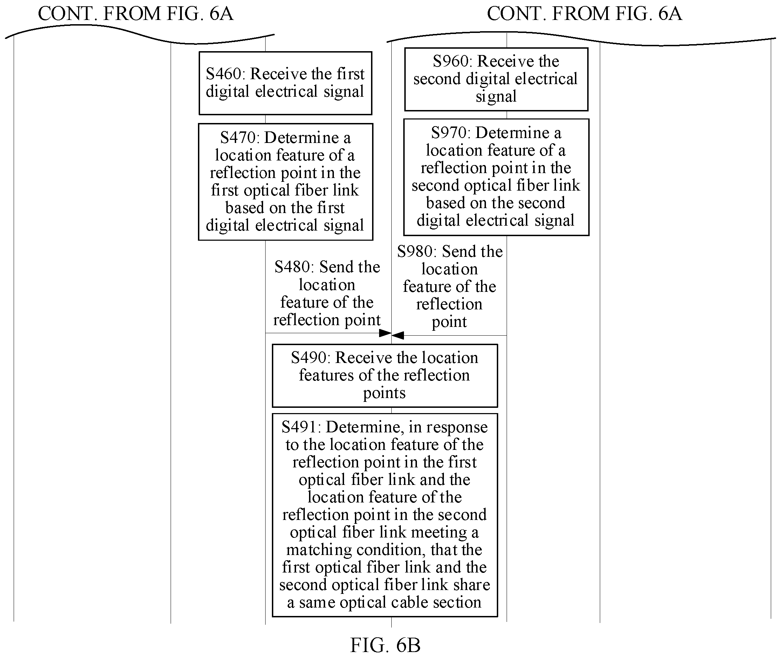

FIG. 6A and FIG. 6B are a schematic flowchart of a co-cable detection method according to an embodiment of this application. The method shown in FIG. 6A and FIG. 6B can be applied to the network system 10 shown in FIG. 1, the network system 10 shown in FIG. 2, or the network system 10 shown in FIG. 3. For example, a first network device and a second network device in the method shown in FIG. 6A and FIG. 6B have the hardware structure shown in FIG. 4(a) to FIG. 4(d).

Step S410: A first optical module generates a first optical signal, where the first optical signal includes an optical pulse signal having a predetermined code pattern, and the predetermined code pattern is used to describe a shape of a relationship curve between a signal power and a time.

In some implementations, the predetermined code pattern includes that duration of one pulse is less than a specified duty cycle. For example, a duty cycle of the optical pulse signal having the predetermined code pattern is less than 5%. Because the duty cycle is low, an overlap between a primary pulse signal and a secondary pulse signal can be reduced, so that a receive end can easily distinguish between an original signal (the optical pulse signal having the predetermined code pattern) and a reflected signal (the secondary pulse signal), thereby improving accuracy of determining a location feature of a reflection point by the receive end.

In some implementations, the predetermined code pattern includes that a signal frequency is greater than a specified frequency. For example, the signal frequency is greater than 1 MHz. Because a frequency of a signal sent by a transmit end is high, implementation complexity of distinguishing between an original signal (the optical pulse signal having the predetermined code pattern) and a reflected signal (a secondary pulse signal) by the receive end is reduced.

Because a code pattern of an optical pulse signal modulated by a transmit-end optical module may be various code patterns such as a square-wave pulse signal, a sine-wave pulse signal, or a triangular-wave pulse signal, dependence on a modulation format of the optical module is small, greatly expanding applicable optical module types.

In some implementations, the transmit-end optical module sends a square-wave pulse signal, so that the receive-end device performs co-cable detection based on the received signal. Because implementation complexity of generating a square-wave pulse signal by the transmit-end device is low, and the square-wave pulse signal is narrow (a duty cycle is small), it is simple for the receive-end device to analyze the square-wave pulse signal to obtain a location feature of a reflection point. This reduces overall implementation complexity of the solution.

In some implementations, the predetermined code pattern includes that duration of one pulse is less than specified pulse duration. For example, the predetermined code pattern includes that duration of one pulse is less than 1 µs. Because the duration of the pulse signal is less than 1 microsecond, it is equivalent to that a signal pulse sent by the transmit end is very short, or a signal sent by the transmit end has a high resolution in time domain. Therefore, signal sharpness and definition can be increased, so that the receive end can more easily detect a pulse change, and more accurately obtain an original signal (the optical pulse signal having the predetermined code pattern) through identification. In addition, this helps the receive end more accurately distinguish between start locations and end locations of the original signal (the optical pulse signal having the predetermined code pattern) and a reflected signal (a secondary pulse signal), making a result of comparing a primary pulse signal and a secondary pulse signal by the receive end more accurate.

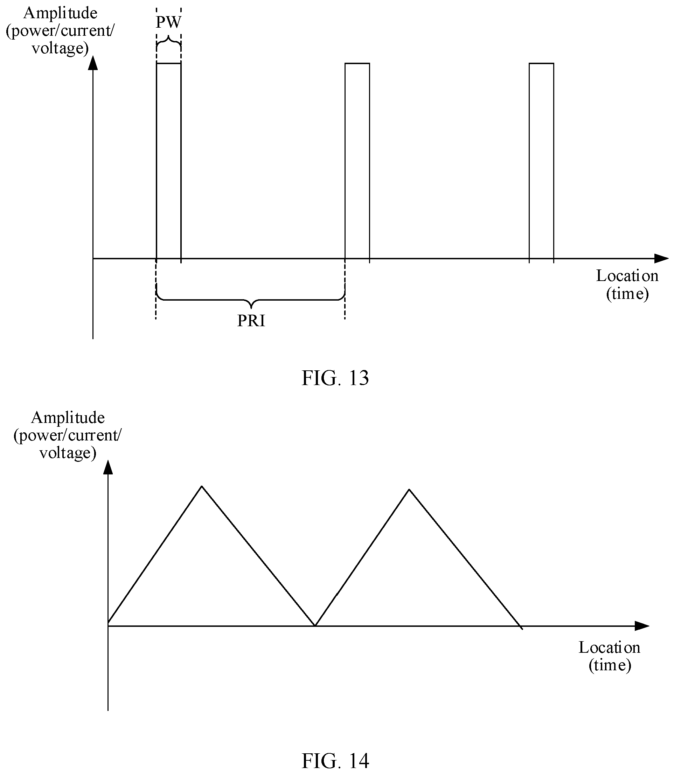

For example, the predetermined code pattern is a square wave. For example, FIG. 13 is a diagram of a waveform of an optical pulse signal having a predetermined code pattern. In FIG. 13, PW represents high-level duration, PRI represents pulse period duration, and PW/PRI represents a duty cycle D.

For example, the predetermined code pattern is a triangular wave. For example, FIG. 14 is a diagram of a waveform of an optical pulse signal having a predetermined code pattern.

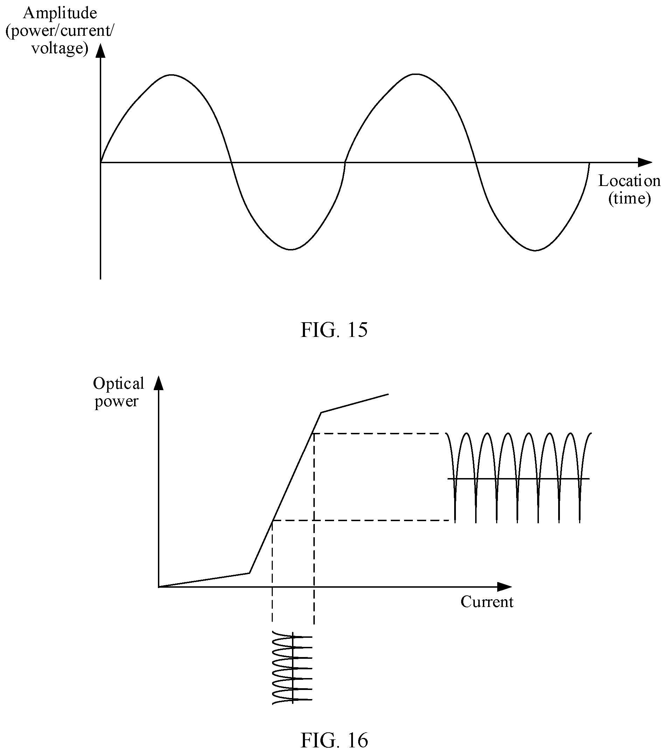

For example, the predetermined code pattern is a sine wave. For example, FIG. 15 is a diagram of a waveform of an optical pulse signal having a predetermined code pattern.

In some implementations, the first optical module receives a configuration instruction. The configuration instruction indicates a code pattern of an optical signal. The configuration instruction carries a parameter that can describe the predetermined code pattern. For example, the configuration instruction carries at least one of a code pattern type, a pulse width, a pulse period, a duty cycle, a peak amplitude, a valley amplitude, a signal frequency, a rise time, and a fall time. The first optical module parses the configuration instruction to obtain the parameter that can describe the predetermined code pattern and that is carried in the configuration instruction, and generates the first optical signal based on the parameter that can describe the predetermined code pattern. Based on this, the code pattern type, the pulse width, the pulse period, the duty cycle, the peak amplitude, the valley amplitude, the signal frequency, the rise time, and the fall time can be customized as required, thereby improving flexibility.

Step S420: The first optical module sends the first optical signal to a second optical module through a first optical fiber link.

Step S430: The second optical module receives the first optical signal through the first optical fiber link.

Step S440: The second optical module performs optical-to-electrical conversion and sampling on the first optical signal to obtain a first digital electrical signal.

Step S450: The second optical module sends the first digital electrical signal to a service chip in the second network device.

Step S460: The service chip in the second network device receives the first digital electrical signal from the second optical module.

Step S470: The second network device determines a location feature of a reflection point in the first optical fiber link based on the first digital electrical signal.

Step S480: The second network device sends the location feature of the reflection point in the first optical fiber link to an analysis device.

Step S910: A third optical module generates a second optical signal.

The second optical signal includes an optical pulse signal having a predetermined code pattern. A code pattern of the second optical signal generated by the third optical module is, for example, the same as that of the first optical signal generated by the first optical module.

Step S920: The third optical module sends the second optical signal to a fourth optical module through a second optical fiber link.

Step S930: The fourth optical module receives the second optical signal through the first optical fiber link.

Step S940: The fourth optical module performs optical-to-electrical conversion and sampling on the second optical signal to obtain a second digital electrical signal.

Step S950: The fourth optical module sends the second digital electrical signal to a service chip in a fourth network device.

Step S960: The service chip in the fourth network device receives the second digital electrical signal.

Step S970: The fourth network device determines a location feature of a reflection point in the second optical fiber link based on the second digital electrical signal.

Step S980: The fourth network device sends the location feature of the reflection point in the second optical fiber link to the analysis device.

Step S490: The analysis device receives the location feature of the reflection point in the first optical fiber link from the second network device and the location feature of the reflection point in the second optical fiber link from the fourth network device.

Step S491: The analysis device determines, in response to the location feature of the reflection point in the first optical fiber link and the location feature of the reflection point in the second optical fiber link meeting a matching condition, that the first optical fiber link and the second optical fiber link share a same optical cable section.

According to the method provided in this embodiment, when two transmit-end optical modules (the first optical module and the third optical module) respectively send optical pulse signals having the predetermined code pattern through two optical fiber links, and two receive ends (the second network device and the fourth network device) process two optical signals received through the two optical fiber links to identify (or determine) location features of reflection points, if location features of corresponding reflection points in the two optical fiber links are the same, it can be predicted that the two optical fiber links has a specific co-cable probability.

The scenario shown in FIG. 1 is used as an example. The method shown in FIG. 6A and FIG. 6B is applied to the scenario shown in FIG. 1. This helps detect a risk that both the first optical fiber link and the second optical fiber link are in the optical cable section 3.

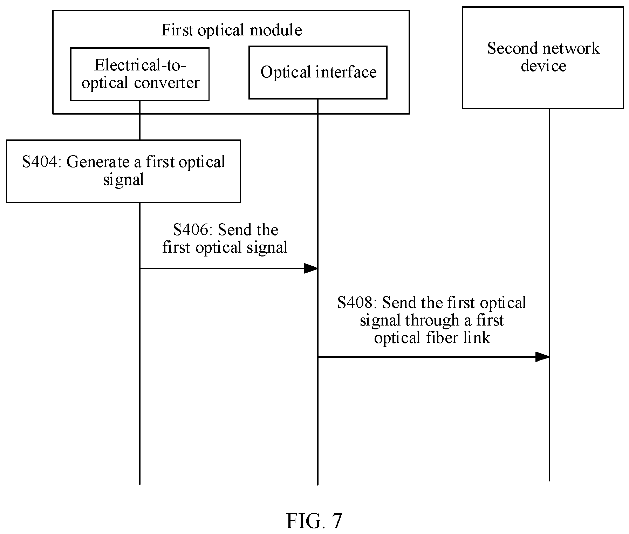

FIG. 7 further describes S410 and/or S910 in the method shown in FIG. 6A and FIG. 6B in a manner of a time sequence interaction diagram. The method shown in FIG. 7 focuses on how hardware components in a transmit-end optical module interact with each other to implement S410 and/or S910. The method shown in FIG. 7 is optionally applied to the first optical module or the third optical module in the network system 10 shown in any one of FIG. 1 to FIG. 3. For a network deployment location of the optical module to which the method shown in FIG. 7 is applied, refer to descriptions of FIG. 1 to FIG. 3.

Step S404: An electrical-to-optical converter generates a first optical signal, where the first optical signal includes an optical pulse signal having a predetermined code pattern, and the predetermined code pattern is used to describe a shape of a relationship curve between a signal power and a time.

In some implementations, the electrical-to-optical converter generates an optical pulse signal having a predetermined code pattern based on a predetermined time interval, to generate the first optical signal, where the first optical signal includes optical pulse signals having a plurality of periods, and the optical pulse signal has the predetermined code pattern in each period.

Considering that if a transmit-end optical module sends only an optical pulse signal having a predetermined code pattern in one period, and a receive-end device samples only a signal in one period, because a data amount of the sampled signal is limited, a location feature of a reflection point that is determined by the receive end may be insufficiently accurate. Therefore, the transmit-end optical module periodically sends the optical pulse signal having the predetermined code pattern, so that a receive-end optical module can sample signals in a plurality of periods, to increase a data amount of the signals sampled by the receive-end optical module, thereby helping improve accuracy of a location feature of a reflection point that is determined by the receive end.

In some implementations, the electrical-to-optical converter performs signal modulation based on a code pattern parameter and a modulation curve, to generate a pulse signal having a predetermined code pattern. The code pattern parameter is a parameter used to describe the predetermined code pattern.

Step S406: The electrical-to-optical converter sends the first optical signal to an optical interface.

Step S408: The optical interface sends the first optical signal to a second optical module through a first optical fiber link, so that a second network device determines a location feature of a reflection point in the first optical fiber link based on an electrical signal generated by the second optical module based on the received optical signal, where the location feature of the reflection point is used to detect whether the first optical fiber link and a second optical fiber link share a same optical cable section.

According to the optical module provided in this embodiment, an optical module serving as a transmit end sends an optical pulse signal having a predetermined code pattern, so that a receive-end device determines a location feature of a reflection point based on an electrical signal generated based on the received optical signal. This helps detect, based on location features of reflection points in different optical fiber links, whether the optical fiber links are co-cable. Because co-cable detection does not rely on OTDR, but the receive-end device is responsible for determining a location feature of a reflection point, application limitations of the OTDR technology are reduced to some extent, so that the optical module serving as a transmit end does not need to implement the OTDR by incorporating various additional components (such as an MCU, an MCM, a DRV, a ROSA, and a filter) for processing a reflected signal such as separating and sampling the reflected signal. This reduces overall power consumption of a transmit-end optical module that is caused by the additional components in implementing the OTDR technology.

In addition, considering that the optical module tends toward miniaturized packaging, the optical module provided in this embodiment helps implement co-cable detection to some extent, and avoids adding an additional component in limited space of the optical module, so that the optical module can maintain a small size, and does not need to occupy more space to place an additional component. This reduces a technical difficulty that co-cable detection cannot be implemented because the limited space of the optical module makes it difficult to deploy an additional component in the transmit-end optical module in the OTDR technology, and reduces dependence on size integration of the optical module.

In addition, since a slight change of hardware of the optical module (based on a hardware structure of the optical module that does not need to be changed) can also help implement co-cable detection to some extent, compatibility with an existing optical module is good. This facilitates smooth evolution of the existing optical module to implement co-cable detection without requiring re-iteration of a hardware version of the optical module, and reduces implementation complexity of co-cable detection based on the optical module.

In addition, this also reduces costs of the entire optical module caused by the additional component in the transmit-end optical module in implementing the OTDR technology.

In addition, this also reduces adverse impact caused by the additional component in the transmit-end optical module on heat dissipation and energy saving of the optical module in implementing the OTDR technology.

In addition, a special-purpose OTDR module does not need to be inserted into a port of a mainboard of a transmit-end device to implement co-cable detection, thereby saving a port occupied by the special-purpose OTDR module on the mainboard of the transmit-end device. This helps improve port utilization of the mainboard of the transmit-end device, and is more applicable to a high-port-density application scenario.

In S410 in the method shown in FIG. 6A and FIG. 6B, there are a plurality of implementations in which the first optical module specifically generates an optical pulse signal having a predetermined code pattern. In this embodiment of this application, the following three modulation schemes are used as an example for description. In S410, any one of the following three modulation schemes can be used.

Modulation scheme 1: The transmit-end optical module performs pilot tone modulation on an optical signal to generate the optical signal having the predetermined code pattern.

In some implementations, the electrical-to-optical converter includes a laser, and the laser performs pilot tone modulation on an optical signal, so that the laser outputs the first optical signal.

Pilot tone modulation means adjusting a feature of an original waveform of an optical signal, to enable an adjusted waveform of the optical signal to have a predetermined shape, thereby generating an optical pulse signal having a predetermined code pattern. A waveform feature of the optical signal includes parameters such as a time sequence, a peak, a valley, and a frequency of the optical signal. A waveform shape of the optical signal can describe a change mode of the optical signal on a time axis. For example, a waveform of an original optical signal (an optical signal without pilot tone modulation) generated by the laser is a straight line, and pilot tone modulation is performed on the original optical signal, so that a peak and a valley appear in the waveform of the optical signal, thereby forming an optical pulse signal having a predetermined code pattern. In some implementations of pilot tone modulation, the optical module adjusts a parameter such as an amplitude, a frequency, a peak location, a valley location, or a duty cycle based on which the laser generates an optical signal, to affect a waveform feature of the optical signal, so that the laser has an optical pulse signal having a predetermined code pattern.

In some implementations of pilot tone modulation, a power of an optical signal is used as a carrier that carries a predetermined code pattern, and the optical module adjusts, based on the predetermined code pattern, a power of an optical signal that is output by the optical module, which is equivalent to coding the optical signal, so that different powers of the optical signal represent different digital bits (bits). For example, a simple optical signal coding manner is non-return-to-zero (Non-Return-to-Zero, NRZ) code. In NRZ coding, a high optical signal power indicates a value of 1, and a low optical signal power or no optical signal indicates a value of 0. In this way, the predetermined code pattern can be transmitted to the receive-end device by changing the power of the optical signal.

In some implementations of pilot tone modulation, the laser adjusts an output optical power of the laser based on a predetermined code pattern, so that the output optical power fluctuates within a range corresponding to the predetermined code pattern, thereby outputting an optical pulse signal having a predetermined code pattern. For example, the output optical power of the laser is usually stable. For example, an original output optical power of the laser is 1 mW. For example, the predetermined code pattern is a square wave. In a pilot tone modulation process, the laser first adjusts the output optical power of the laser to 0.5 mW, and the laser continuously outputs an optical signal based on the output optical power of 0.5 mW; after a first predetermined time interval, the laser adjusts the output optical power of the laser to 1.5 mW, and the laser continuously outputs an optical signal based on the output optical power of 1.5 mW; after a second predetermined time interval, the laser adjusts the output optical power of the laser again to 1 mW, and the laser continuously outputs an optical signal based on the output optical power of 1 mW; and so on. The output optical power of the laser fluctuates in a mode of 0.5 mW→1.5 mW→0.5 mW→1.5 mW, thereby generating the predetermined code pattern.

Pilot tone modulation is performed on an optical signal generated by the laser, so that the optical module sends an optical pulse signal having a predetermined code pattern. Therefore, an execution location of signal code pattern modulation is very close to an optical port. For example, after the transmit-end optical module performs a signal processing procedure such as electrical signal processing and electrical-to-optical conversion, pilot tone modulation is performed before an optical signal is transmitted, to implement signal code pattern modulation, thereby reducing a deviation between a code pattern of an optical signal actually transmitted by the optical module and the predetermined code pattern that is caused by performing the signal processing procedure such as electrical signal processing and electrical-to-optical conversion. This reduces interference caused by the deviation between the code pattern of the optical signal actually sent by the optical module and the predetermined code pattern to determining of a location feature of a reflection point by the receive-end device, thereby helping improve the location feature of the reflection point determined by the receive-end device, and improving accuracy of co-cable detection.

In addition, an optical pulse signal having a predetermined code pattern can be generated based on a general-purpose optical module, and the optical module does not need to include an oDSP for modulation of the predetermined code pattern. This further improves a range of optical modules applicable to the solution, and reduces a requirement of co-cable detection on a transmit-end optical module.

In addition, a board-mounted service chip of a network device does not need to be changed, so that the board-mounted service chip of the network device can modulate an electrical signal having a predetermined code pattern. This reduces a requirement on the board-mounted service chip of the network device.

An implementation of generating an optical signal having a predetermined code pattern through pilot tone modulation on an optical signal specifically includes Implementation A or Implementation B below.

Implementation A of pilot tone modulation on an optical signal: Through bias current modulation, pilot tone modulation is performed on an output optical signal of the laser in the optical module, to output the optical pulse signal having the predetermined code pattern. Bias current modulation is also referred to as bias modulation or TOSA modulation.

In some implementations of bias current modulation, the laser receives an input first bias current. The laser generates the first optical signal based on the first bias current. The laser outputs the first optical signal through an output end.

In some implementations, the optical module first sets an initial bias current for the laser as a reference current, then superimposes a current having a specific code pattern with the initial bias current, and inputs a superimposed bias current to an input end of the laser, so that the laser generates and outputs an optical signal having a specific code pattern based on the superimposed bias current.

The code pattern parameter is a parameter used to describe the predetermined code pattern. In some implementations of bias current modulation, a code pattern parameter corresponding to the first bias current is configured for the optical module, and the optical module generates the first bias current based on the code pattern parameter corresponding to the first bias current, and inputs the first bias current to the input end of the laser, to trigger the laser to generate and output an optical signal having a specific code pattern. The code pattern parameter corresponding to the first bias current includes at least one of a pulse width, a pulse period, a duty cycle, a peak amplitude, a valley amplitude, a signal frequency, a rise time, and a fall time.

In some implementations, a modulation curve between the first bias current and the output optical power of the laser corresponds to the predetermined code pattern. The first bias current is determined, for example, based on the modulation curve and the predetermined code pattern. The modulation curve of the laser indicates a correspondence between the output optical power of the laser and a bias current that is input to the laser. The modulation curve describes how the output optical power of the laser changes with the bias current. The bias current of the laser is adjusted based on the modulation curve, so that the output optical power of the laser can fluctuate within a range corresponding to the predetermined code pattern. Therefore, the laser can output the optical pulse signal having the predetermined code pattern.

In some implementations, the first bias current includes a peak bias current and a valley bias current. The peak bias current is a maximum value of the bias current that is input to the laser in a predetermined time interval. The peak bias current is determined based on a peak optical power and the modulation curve of the laser. The peak optical power is a maximum value of the output optical power of the laser in a predetermined time interval. The valley bias current is a minimum value of the bias current that is input to the laser in a predetermined time interval. The valley bias current is determined based on a valley optical power and the modulation curve of the laser. The valley bias current is a maximum value of the output optical power of the laser in a predetermined time interval. The laser generates and outputs a peak optical power based on an input peak bias current. The laser generates and outputs an optical power valley value based on an input bias current valley value, so that a power of an optical signal that is output by the laser fluctuates with a peak and a valley, thereby generating the optical pulse signal having the predetermined code pattern.

For example, for an EML laser, when a bias current that is input to the EML laser is 30 mA, an output optical power of the EML laser is 0 dBm; and when a bias current that is input to the EML laser is 30 mA, an output optical power of the EML laser is 5 dBm. In this bias current adjustment manner, an optical output power corresponding to the predetermined code pattern is obtained. For example, FIG. 16 is a diagram of a modulation curve of the laser. The first bias current is determined by using the modulation curve shown in FIG. 16, and the first bias current is input to the laser, so that the laser outputs the optical pulse signal having the predetermined code pattern.

In a specific example, the optical pulse signal having the predetermined code pattern is, for example, a square wave. The optical module generates the first bias current, and the first bias current alternates between a peak current and a valley current based on a predetermined time interval. After the first bias current is input to the laser, an optical signal that is output by the laser alternates between a peak power and a valley power based on a predetermined time interval.

A source of the bias current corresponding to the optical pulse signal having the predetermined code pattern includes a plurality of cases. In some implementations, the first optical module further includes a microcontroller unit MCU, and the MCU is configured to generate the first bias current, and input the first bias current to the laser. In some other implementations, an electrical interface is further electrically connected to a signal source located outside the first optical module, and the electrical interface receives the first bias current from the signal source, and inputs the first bias current to the laser.

Implementation B of pilot tone modulation on an optical signal: Through driver (driver) modulation, pilot tone modulation is performed on an output optical signal of the laser in the optical module based on a drive electrical signal related to the predetermined code pattern, to output the optical pulse signal having the predetermined code pattern.

In some implementations, an input end of a driver receives a first control signal. The driver generates a first drive electrical signal based on the first control signal. An output end of the driver outputs the first drive electrical signal to the laser. An input end of the laser receives the first drive electrical signal. The laser generates the first optical signal based on the first drive electrical signal. An output end of the laser outputs the first optical signal.

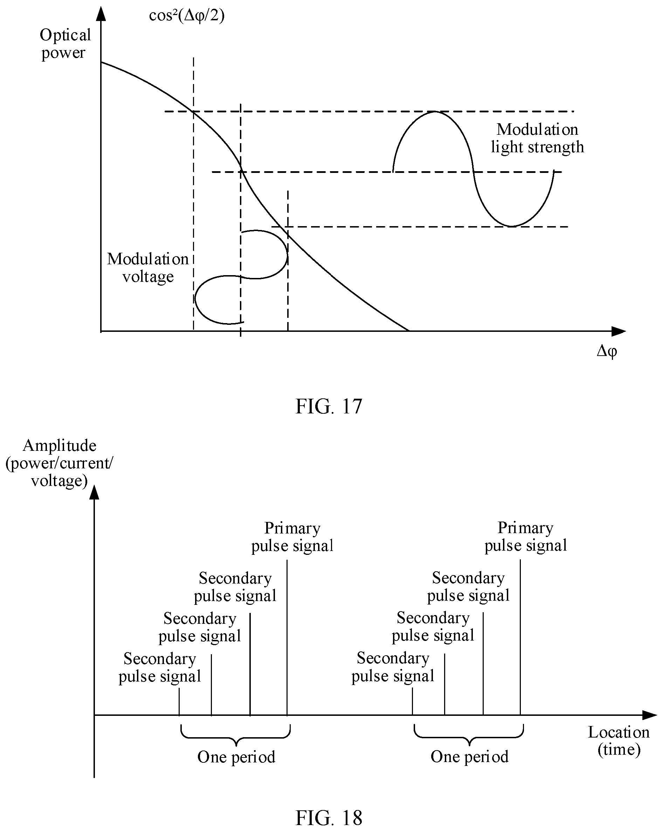

A modulation curve between the first drive electrical signal and the output optical power of the laser corresponds to the predetermined code pattern. For example, an amplitude value, a frequency, or a duty cycle of the first drive electrical signal corresponds to the predetermined code pattern. The first drive electrical signal is, for example, a current signal or a voltage signal. The first control signal is, for example, a current signal or a voltage signal. For example, when an MZ-type electro-optic modulator is used, a modulation curve corresponding to the MZ-type electro-optic modulator is shown in FIG. 17. The modulation curve shown in FIG. 17 shows a relationship between modulation light strength and a modulation voltage. The modulation light strength is strength of an optical signal that is output by the laser, and the modulation voltage is an amplitude value of a voltage signal (a control signal) that is input by the laser. A predetermined voltage is input to the MZ-type electro-optic modulator to implement modulation of the output optical power, thereby outputting the predetermined code pattern.

In some implementations, pilot tone modulation on the output optical power is implemented by controlling a modulation signal pin of the driver. For example, a signal source outside the driver inputs the first control signal to the modulation signal pin of the driver, so that the driver outputs the first drive electrical signal.

Because the driver drives the laser to generate the optical pulse signal having the predetermined code pattern, a deviation between a code pattern of an optical signal actually sent by the optical module and the predetermined code pattern that is caused by performing a signal processing procedure such as electrical signal processing and electrical-to-optical conversion is reduced. This reduces interference caused by the deviation between the code pattern of the optical signal actually sent by the optical module and the predetermined code pattern to determining of a location feature of a reflection point by the receive-end device, thereby helping improve the location feature of the reflection point determined by the receive-end device, and improving accuracy of co-cable detection. In addition, because the driver and the laser are general-purpose hardware in the optical module, a special-purpose signal processor does not need to be configured in the optical module to modulate the optical pulse signal having the predetermined code pattern. This reduces a requirement of the optical module for modulating the optical pulse signal having the predetermined code pattern.

In a specific example, the optical pulse signal having the predetermined code pattern is, for example, a square wave. The driver generates the first drive electrical signal, and the first drive electrical signal alternates between a peak voltage and a valley voltage based on a predetermined time interval. For example, the first drive electrical signal is a voltage signal that alternates between a high level and a low level. After the first drive electrical signal is input to the laser, an optical signal that is output by the laser alternates between a peak power and a valley power based on a predetermined time interval.

An implementation of pilot tone modulation can be used for an optical module with NRZ modulation, for example, a 100G LR4 optical module. Considering that the optical module with NRZ modulation does not internally include an oDSP chip, pilot tone modulation is performed on an optical module serving as a transmit end, to implement transmission of the optical pulse signal having the predetermined code pattern.

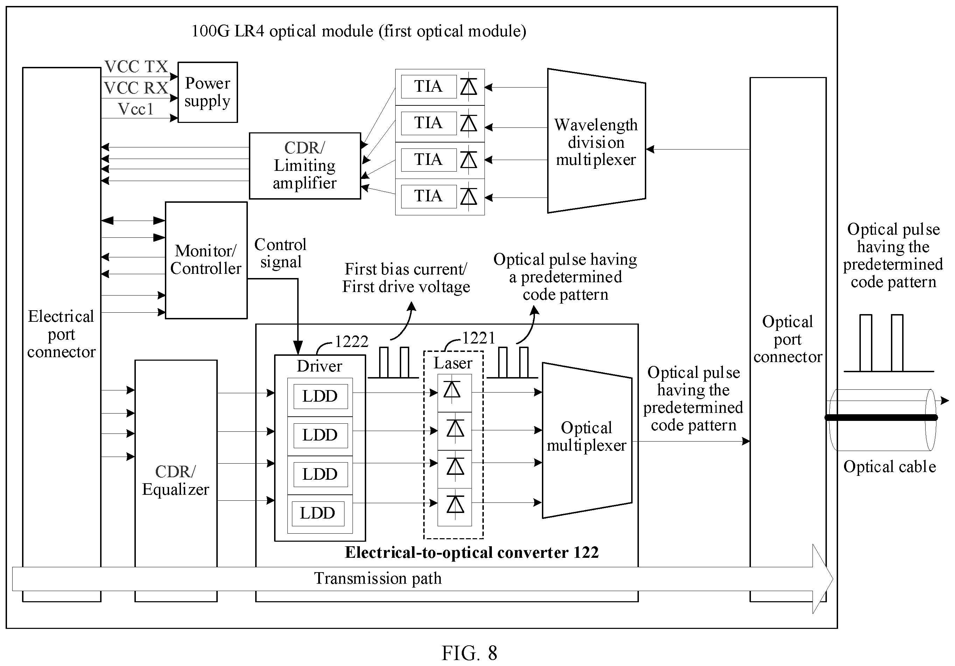

FIG. 8 is a diagram of a structure of a 100G LR4 optical module according to an embodiment of this application. The 100G LR4 optical module shown in FIG. 8 is applicable to the method for generating an optical signal having a predetermined code pattern through pilot tone modulation described in Modulation scheme 1. Optionally, the first optical module and the third optical module in the network system 10 shown in FIG. 1, FIG. 2, or FIG. 3 have the hardware structure shown in FIG. 8. Optionally, the optical module 120 shown in FIG. 4(a) to FIG. 4(d) has the hardware structure shown in FIG. 8.

In some implementations, the electrical-to-optical converter 122 in the optical module 120 shown in FIG. 4(a) to FIG. 4(d) includes an electrical-to-optical converter shown in FIG. 8.

The driver 1222 in the electrical-to-optical converter 122 shown in FIG. 4(a) to FIG. 4(d) includes, for example, four LDDs shown in FIG. 8. Each LDD is configured to drive one laser. An input end of each LDD is connected to an equalizer or a controller. An output end of each LDD is connected to a laser.

The laser 1221 in the electrical-to-optical converter 122 shown in FIG. 4(a) to FIG. 4(d) includes four lasers shown in FIG. 8. An input end of each of the four lasers is connected to the driver 1222. An output end of each of the four lasers is connected to an optical multiplexer. The four lasers are configured to generate and output four optical pulse signals having the predetermined code pattern.

The electrical-to-optical converter 122 in the optical module 120 shown in FIG. 4(a) to FIG. 4(d) further includes an optical multiplexer. An input end of the optical multiplexer is connected to the four lasers. An output end of the optical multiplexer is connected to an optical port connector.

The electrical interface 121 in the optical module 120 shown in FIG. 4(a) to FIG. 4(d) includes an electrical port connector shown in FIG. 8. The electrical port connector is configured to electrically connect to a mainboard. The electrical port connector is, for example, an electrical connector having 38 pins (38-pin Connector).

The optical interface 123 in the optical module 120 shown in FIG. 4(a) to FIG. 4(d) includes an optical port connector shown in FIG. 8. The optical port connector is configured to connect to an optical fiber link in an optical cable.

With reference to the hardware structure shown in FIG. 8, for example, when Implementation A of pilot tone modulation on an optical signal is used, each of the four LDDs in the driver 1222 generates one first bias current, and the output end of each of the four LDDs outputs the one first bias current.

Each of the four lasers in the laser 1221 receives the one first bias current from the LDD. Each of the four lasers in the laser 1221 generates one optical pulse signal having the predetermined code pattern based on the one first bias current. Each of the four lasers in the laser 1221 outputs the one optical pulse signal having the predetermined code pattern.

The input end of the optical multiplexer receives four optical pulse signals having the predetermined code pattern. The optical multiplexer combines the four optical pulse signals having the predetermined code pattern into one optical pulse signal having the predetermined code pattern. The output end of the optical multiplexer outputs the one optical pulse signal having the predetermined code pattern. The optical port connector sends the one optical pulse signal having the predetermined code pattern to the optical fiber link in the optical cable, so that the one optical pulse signal having the predetermined code pattern is transmitted through the optical fiber link.

With reference to the hardware structure shown in FIG. 8, for another example, when Implementation B of pilot tone modulation on an optical signal is used, each of the four LDDs in the driver 1222 generates one first drive voltage, and the output end of each of the four LDDs outputs the one first drive voltage.

Each of the four lasers in the laser 1221 receives the one first drive voltage from the LDD. Each of the four lasers in the laser 1221 generates one optical pulse signal having the predetermined code pattern based on the one first drive voltage. Each of the four lasers in the laser 1221 outputs the one optical pulse signal having the predetermined code pattern.

The input end of the optical multiplexer receives four optical pulse signals having the predetermined code pattern. The optical multiplexer combines the four optical pulse signals having the predetermined code pattern into one optical pulse signal having the predetermined code pattern. The output end of the optical multiplexer outputs the one optical pulse signal having the predetermined code pattern. The optical port connector sends the one optical pulse signal having the predetermined code pattern to the optical fiber link in the optical cable, so that the one optical pulse signal having the predetermined code pattern is transmitted through the optical fiber link.

Both Implementation A of pilot tone modulation on an optical signal and Implementation B of pilot tone modulation on an optical signal implement signal modulation performed by the transmit end through the optical module.

Modulation scheme 2: The transmit end modulates an electrical signal by using an oDSP included in the optical module, to generate the optical pulse signal having the predetermined code pattern.

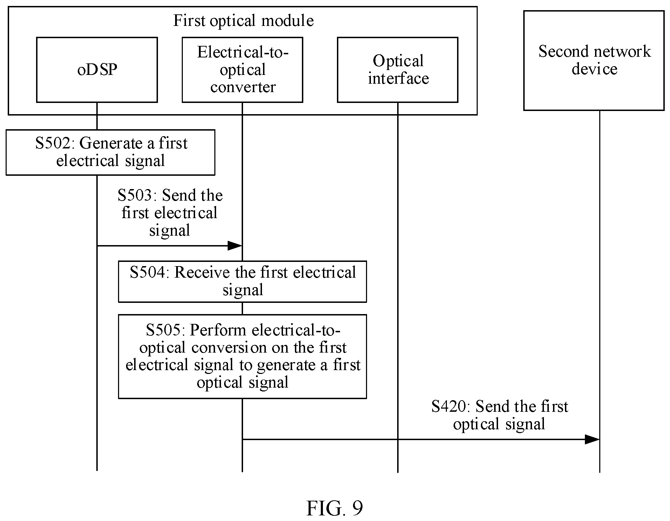

FIG. 9 further describes S410 in the method shown in FIG. 6A and FIG. 6B in a manner of a time sequence interaction diagram. The method shown in FIG. 9 focuses on how hardware components in a transmit-end optical module interact with each other to implement S410 when Modulation scheme 2 is used. Step S504 in the method shown in FIG. 9 is a specific example of step S410 in the method shown in FIG. 6A and FIG. 6B. The method shown in FIG. 9 is optionally applied to the first optical module or the third optical module in the network system 10 shown in any one of FIG. 1 to FIG. 3.

Step S502: The oDSP in the optical module generates a first electrical signal, where the first electrical signal includes an electrical pulse signal having a predetermined code pattern, and the first electrical signal is, for example, a digital electrical signal.

Step S503: The oDSP sends the first electrical signal to an electrical-to-optical converter in the optical module.

Step S504: The electrical-to-optical converter receives the first electrical signal.

Step S505: The electrical-to-optical converter performs electrical-to-optical conversion on the first electrical signal to generate the first optical signal.

For example, the oDSP outputs the first electrical signal through an output end of the oDSP, and an input end of the electrical-to-optical converter is electrically connected to the output end of the oDSP. Therefore, the electrical-to-optical converter can receive the first electrical signal.

For example, the oDSP internally includes a coding unit. The oDSP can edit the digital electrical signal having the predetermined code pattern through the coding unit, and the oDSP outputs the digital electrical signal having the predetermined code pattern through the output end. A driver generates a first drive electrical signal based on the digital electrical signal having the predetermined code pattern, and a laser generates the optical pulse signal having the predetermined code pattern based on the first drive electrical signal, and outputs the optical pulse signal having the predetermined code pattern.

The electrical signal having the predetermined code pattern is generated by using the oDSP, so that the electrical signal received by the electrical-to-optical converter has the predetermined code pattern. Therefore, an optical signal that is output by the electrical-to-optical converter after the electrical-to-optical converter performs electrical-to-optical conversion on the electrical signal also has the predetermined code pattern, thereby eliminating reliance on a service chip on the mainboard to generate the electrical signal having the predetermined code pattern. In addition, the electrical-to-optical converter in the optical module does not need to support pilot tone modulation to generate the optical signal having the predetermined code pattern, thereby reducing implementation complexity of the electrical-to-optical converter in the optical module.

In some implementations in which the oDSP performs signal modulation, the oDSP receives configured pattern (pattern) interleaving to implement modulation to generate a signal having the predetermined code pattern. The pattern is a binary digital sequence used to describe the predetermined code pattern. Pattern interleaving means inserting a pattern into a signal flow or changing a signal amplitude based on a pattern, to implement modulation.

Modulation scheme 2 is applicable to an optical module with PAM4 modulation, for example, a 100G LR1 optical module. The optical module with PAM4 modulation internally includes an oDSP chip, and the optical module with PAM4 modulation can generate the optical pulse signal having the predetermined code pattern by configuring pattern interleaving through the oDSP chip.

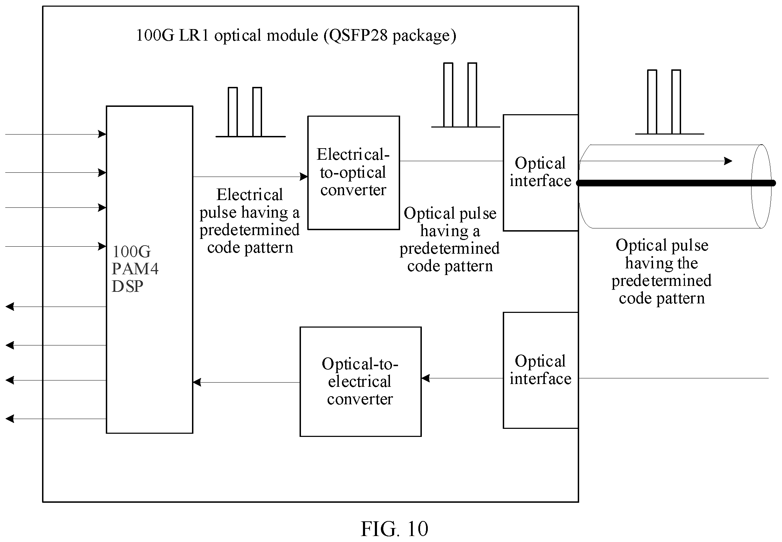

FIG. 10 is a diagram of a structure of a 100G LR1 optical module according to an embodiment of this application. The 100G LR1 optical module shown in FIG. 10 is applicable to the method for generating an optical signal having a predetermined code pattern described in Modulation scheme 2. Optionally, the first optical module and the third optical module in the network system 10 shown in FIG. 1, FIG. 2, or FIG. 3 have the hardware structure shown in FIG. 10. Optionally, the optical module 120 shown in FIG. 4(a) to FIG. 4(d) has the hardware structure shown in FIG. 10.

A 100G PAM4 DSP in the 100G LR1 optical module shown in FIG. 10 is a specific example of the oDSP 140 in the optical module 120 shown in FIG. 4(a) to FIG. 4(d). The 100G LR1 optical module can generate an electrical pulse signal having the predetermined code pattern through modulation by the 100G PAM4 DSP. The 100G LR1 optical module generates an optical pulse signal having the predetermined code pattern through an electrical-to-optical converter based on the electrical pulse signal having the predetermined code pattern.

Modulation scheme 3: The transmit end performs modulation through a service chip (for example, a board-mounted service chip) to generate the optical pulse signal having the predetermined code pattern.

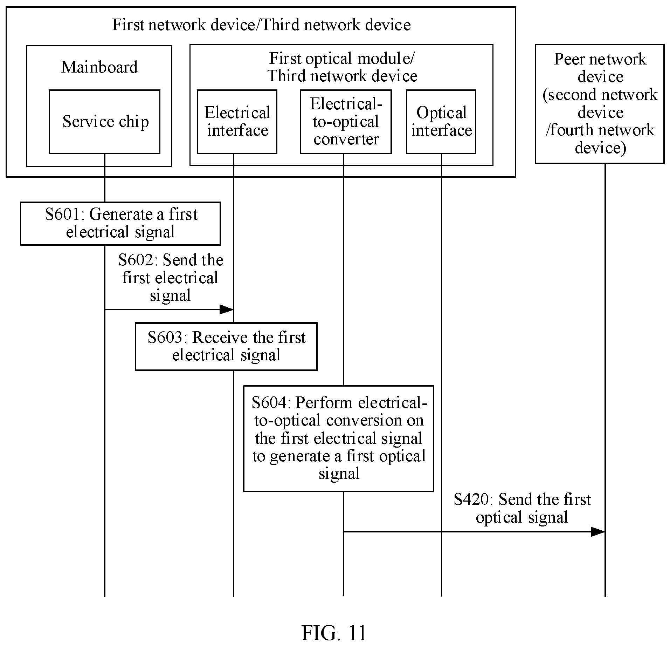

FIG. 11 further describes S410 in the method shown in FIG. 6A and FIG. 6B in a manner of a time sequence interaction diagram. The method shown in FIG. 11 focuses on how hardware components in a transmit-end optical module interact with each other to implement S410 when Modulation scheme 2 is used. Step S601 to step S604 in the method shown in FIG. 11 are a specific example of step S410 in the method shown in FIG. 6A and FIG. 6B. The method shown in FIG. 11 is optionally applied to the first network device or the third network device in the network system 10 shown in any one of FIG. 1 to FIG. 3.

Step S601: A service chip on a mainboard generates a first electrical signal, where the first electrical signal includes an electrical pulse signal having a predetermined code pattern.

In some implementations, the service chip receives a configuration instruction. The configuration instruction carries a parameter that can describe the predetermined code pattern. For example, the configuration instruction carries at least one of a code pattern type, a pulse width, a pulse period, a duty cycle, a peak amplitude, a valley amplitude, a signal frequency, a rise time, and a fall time. The service chip parses the configuration instruction to obtain the parameter that can describe the predetermined code pattern and that is carried in the configuration instruction, and generates the first electrical signal based on the parameter that can describe the predetermined code pattern.

Step S602: The service chip sends the first electrical signal to a first optical module through an electrical interface.

Step S603: The electrical interface of the first optical module receives the first electrical signal from the service chip.

Step S604: An electrical-to-optical converter of the first optical module receives the first electrical signal, and performs electrical-to-optical conversion on the first electrical signal to generate a first optical signal.

Because an electrical pulse signal received by the optical module has the predetermined code pattern, after the optical module performs electrical-to-optical conversion on the electrical pulse signal having the predetermined code pattern, a generated optical pulse signal has the predetermined code pattern, thereby implementing a function of generating the optical pulse signal having the predetermined code pattern. In addition, the optical module does not need to support pilot tone modulation to generate an optical signal having the predetermined code pattern, thereby reducing implementation complexity of the optical module.

In some implementations, the service chip in the first network device detects a status of the service chip, and when the service chip is in an idle state, the service chip sends the electrical pulse signal having the predetermined code pattern. The electrical pulse signal having the predetermined code pattern is converted into the optical pulse signal having the predetermined code pattern through the electrical-to-optical converter in the optical module, and the optical pulse signal having the predetermined code pattern is transmitted to the second network device through an optical fiber link.

In some implementations, the transmit-end optical module determines a status of the optical fiber link, and sends the optical pulse signal having the predetermined code pattern in a vacant slot of the optical fiber link. Because the optical pulse signal having the predetermined code pattern is sent in the vacant slot of the optical fiber link, the optical pulse signal having the predetermined code pattern that is used for co-cable detection almost does not occupy a transmission time of service data, thereby reducing impact of a process of transmitting the optical pulse signal having the predetermined code pattern on transmission quality of the service data.

With reference to the three modulation schemes, the foregoing describes how the transmit end generates the optical pulse signal having the predetermined code pattern by using an example. The transmit end can flexibly select a specific modulation scheme as required. For example, the transmit end determines a specific modulation scheme based on a hardware capability of the device. For example, when the optical module supports pilot tone modulation on an optical signal, the transmit end uses Modulation scheme 1. For example, when the optical module includes a direct-drive laser, the transmit end uses a bias current modulation scheme. For example, when a type of the laser in the optical module is EML, the transmit end uses a driver modulation scheme. For another example, when the transmit-end optical module has an oDSP, the transmit end uses Modulation scheme 2. For another example, when the optical module neither supports pilot tone modulation on an optical signal nor has an oDSP, the transmit end uses Modulation scheme 3.

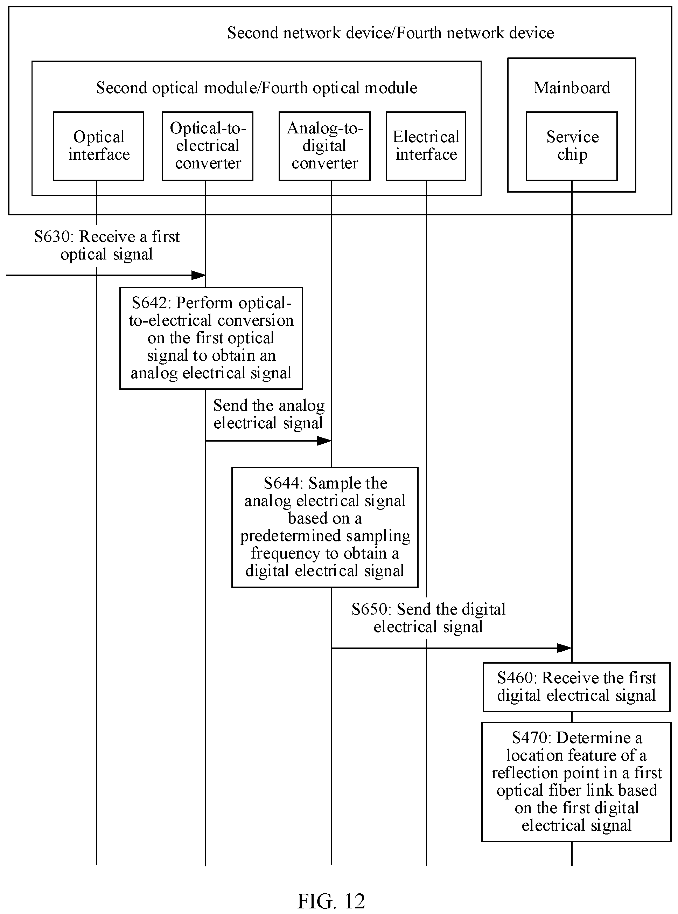

FIG. 12 further describes steps S430 to S450 in the method shown in FIG. 6A and FIG. 6B in a manner of a time sequence interaction diagram. The method shown in FIG. 12 focuses on how hardware components inside a receive-end optical module interact with each other to perform steps S430 to S450. The method shown in FIG. 12 is applied to the second optical module in the network system 10 shown in any one of FIG. 1 to FIG. 3. The method shown in FIG. 12 includes the following steps.

Step S630: An optical interface in the second optical module receives a first optical signal from a first optical module through a first optical fiber link, where the first optical signal includes an optical pulse signal having a predetermined code pattern, and the predetermined code pattern is a shape of a relationship curve between a signal power and a time.

Step S642: An optical-to-electrical converter performs optical-to-electrical conversion on the first optical signal to obtain an analog electrical signal.

Step S644: An analog-to-digital converter samples the analog electrical signal based on a predetermined sampling frequency to obtain a digital electrical signal.

Considering that an object processed by a service chip is usually a digital electrical signal, the receive-end optical module samples an electrical signal generated by the optical-to-electrical converter, and converts the analog electrical signal generated by the optical-to-electrical converter into a digital electrical signal, so that a receive-end service chip determines a location feature of a reflection point based on the digital electrical signal, thereby reducing a risk that is of determining a location feature of a reflection point and that is caused because the receive-end service chip does not support processing of the analog electrical signal. In addition, because the analog-to-digital converter can perform sampling based on a predetermined sampling frequency corresponding to the predetermined code pattern, accuracy of a digital electrical signal obtained through sampling meets a requirement for determining a location feature of a reflection point.

In some implementations, a sampling frequency based on which the receive-end optical module samples an electrical signal converted from an optical signal is related to the predetermined code pattern. For example, there is a correspondence between the sampling frequency used by the receive-end optical module and the predetermined code pattern. For example, there is a correspondence between the sampling frequency used by the receive-end optical module and a signal frequency corresponding to the predetermined code pattern. For example, the sampling frequency used by the receive-end optical module is determined based on the signal frequency corresponding to the predetermined code pattern. For example, the sampling frequency used by the receive-end optical module is positively correlated with the signal frequency corresponding to the predetermined code pattern. In other words, a larger signal frequency corresponding to the predetermined code pattern indicates a larger sampling frequency used by the receive-end optical module.

Because the sampling frequency used by the receive-end optical module accordingly increases with the signal frequency corresponding to the predetermined code pattern, and the receive-end optical module can collect more sampling points by increasing the sampling frequency based on the predetermined code pattern, the receive-end optical module can better collect signal details, thereby reducing code pattern distortion and information loss in a signal sampling process, and making a sampling result more accurately restore and reflect a predetermined code pattern of a signal sent by the transmit end. This is equivalent to that the receive-end optical module serves as a sampling tool with high accuracy. This helps improve accuracy of a location feature of a reflection point that is determined by the receive-end service chip based on the sampling result of the receive-end optical module, and further helps improve accuracy of co-cable detection.

In some implementations, a ratio of the sampling frequency based on which the receive-end optical module samples the electrical signal converted from the optical signal to the signal frequency corresponding to the predetermined code pattern meets a condition. For example, the ratio of the sampling frequency used by the receive-end optical module to the signal frequency corresponding to the predetermined code pattern is greater than a specified ratio. For example, the sampling frequency used by the receive-end optical module is greater than twice the signal frequency corresponding to the predetermined code pattern. For example, the sampling frequency used by the receive-end optical module is 10 times the signal frequency corresponding to the predetermined code pattern. For example, a frequency of an optical signal having a predetermined code pattern that is sent by a transmit-end optical module is greater than 1 MHz, and the receive-end optical module samples, at a sampling frequency greater than 10 MHz, an electrical signal converted from the optical signal, so that signal details can be better collected, thereby further reducing distortion of the predetermined code pattern and information loss in a sampling process. This improves accuracy of a location feature of a reflection point that is determined by the receive-end service chip based on a sampling result of the receive-end optical module, and helps improve accuracy of co-cable detection.

In some implementations, the signal frequency corresponding to the predetermined code pattern is greater than 1 MHz, and the sampling frequency is greater than 10 MHz.

This embodiment does not limit a location of the analog-to-digital converter in the optical module or a source of the analog-to-digital converter. The following uses three implementations as an example for description.

In Implementation 1 of an analog-to-digital converter, the optical module further includes an oDSP, the oDSP includes an analog-to-digital converter, and the oDSP performs the sampling process described in step S644 by using the built-in analog-to-digital converter.

In Implementation 2 of an analog-to-digital converter, the optical module further includes an MCU, the MCU includes an analog-to-digital converter, and the MCU performs the sampling process described in step S644 by using the built-in analog-to-digital converter.

In Implementation 3 of an analog-to-digital converter, the optical module includes an independent analog-to-digital converter, and the analog-to-digital converter is located outside an oDSP and an MCU. For example, the analog-to-digital converter and main hardware components (an electrical interface, an optical-to-electrical converter, and an optical interface) inside the optical module are disposed on a same circuit board. The analog-to-digital converter is electrically connected to the main hardware components (the electrical interface, the optical-to-electrical converter, and the optical interface) inside the optical module through the circuit board. An input end of the analog-to-digital converter is connected to the optical-to-electrical converter, an output end of the analog-to-digital converter is connected to the electrical interface, the analog-to-digital converter receives an analog electrical signal through the input end, and the analog-to-digital converter performs the sampling process described in step S430 based on the received analog electrical signal and the predetermined sampling frequency.

Step S650: The electrical interface sends the digital electrical signal to a service chip on a mainboard of a second network device.

For example, the optical module communicates with the service chip in an IIC manner, the optical module sends the digital electrical signal through the electrical interface in an ICC manner, the mainboard of the second network device receives the digital electrical signal, the service chip on the mainboard receives the digital electrical signal, and the service chip determines a location feature of a reflection point in the first optical fiber link based on the digital electrical signal, where the location feature of the reflection point is used to detect whether the first optical fiber link and a second optical fiber link share a same optical cable section.

According to the method provided in this embodiment, after an optical module of a receive end (the second network device) receives an optical signal from an optical fiber link, the optical module of the receive end performs optical-to-electrical conversion on the received optical signal to obtain an analog electrical signal; the optical module of the receive end samples the analog electrical signal to obtain a digital electrical signal; the optical module of the receive end sends the digital electrical signal to a service chip of the receive end; and the service chip of the receive end identifies a primary pulse signal and a secondary pulse signal based on the digital electrical signal, and compares a parameter of the primary pulse signal with a parameter of the secondary pulse signal to obtain a location feature of a reflection point.

In particular, considering that an optical signal is a continuously changing analog signal, an amplitude and a shape of the optical signal may greatly vary. By converting the optical signal into an electrical signal, for example, converting a power of the optical signal into a voltage or a current, parameters (for example, an amplitude and a time location) of the obtained analog electrical signal are related to the optical signal. Considering that most service chips do not support direct analysis of the analog electrical signal but support processing of discrete digital data, the optical module samples the analog signal, and converts the analog electrical signal into a digital electrical signal, so that the service chip extracts a parameter of a primary pulse signal and a parameter of a secondary pulse signal from the digital electrical signal.

An example in which the method shown in FIG. 12 is applied to the second optical module is used for description. The method shown in FIG. 12 may alternatively be applied to a fourth optical module. For example, S930 to S950 are implemented in the fourth optical module by using the method shown in FIG. 12.

The following describes how hardware components in a receive-end network device interact with each other to perform steps S460 and S470.

Step S460: An electrical interface receives a digital electrical signal from a second optical module.

Step S470: A service chip determines a location feature of a reflection point in a first optical fiber link based on the digital electrical signal, where the location feature of the reflection point is used to detect whether the first optical fiber link and a second optical fiber link share a same optical cable section.

In some implementations, a process of determining the location feature of the reflection point in the first optical fiber link includes step S4701 and step S4702 below.

Step S4701: The service chip determines a primary pulse signal in the digital electrical signal and a secondary pulse signal in the digital electrical signal.

Step S4702: The service chip compares a parameter of the primary pulse signal with a parameter of the secondary pulse signal to obtain the location feature of the reflection point.

The primary pulse signal is generated by performing optical-to-electrical conversion and sampling on an optical pulse signal having a predetermined code pattern, and the secondary pulse signal is generated by performing optical-to-electrical conversion and sampling on a derivative tail signal that is generated by reflecting the optical pulse signal having the predetermined code pattern at a reflection point during transmission through the first optical fiber link.

In some implementations, the service chip compares a location of the primary pulse signal with a location of the secondary pulse signal to obtain a distance between the location of the primary pulse signal and the location of the secondary pulse signal.

In some implementations, the service chip determines the location feature of the reflection point by analyzing a difference between a waveform of the primary pulse signal and a waveform of the secondary pulse signal.

For example, locations of secondary pulse signals generated by different reflection points are different from a location of an original pulse signal (a primary pulse signal) sent by a transmit end. For example, if a distance between a reflection point a and the transmit end is 3 km, a distance between a secondary pulse signal generated by the reflection point a and a primary pulse signal in a signal received by a receive end is a distance corresponding to 3 km. After a digital signal that is output after sampling is obtained, a distance between a location of a derivative pulse signal generated by a reflection point and a location of an original pulse signal (a primary pulse signal) is detected from the digital signal. A shorter distance between a reflection point and the transmit end indicates a shorter distance between a secondary pulse signal generated by the reflection point and the primary pulse signal. Therefore, a location relationship between reflection points can be determined based on relative time differences of different pulse signals.

In some implementations, the service chip compares an amplitude of the primary pulse signal with an amplitude of the secondary pulse signal to obtain a distance between the amplitude of the primary pulse signal and the amplitude of the secondary pulse signal. For example, the service chip determines to compare the amplitude of the primary pulse signal with the amplitude of the secondary pulse signal to obtain the distance between the amplitude of the primary pulse signal and the amplitude of the secondary pulse signal.

Implementations for identifying a primary pulse signal and a secondary pulse signal include a location-based identification manner, an amplitude-based identification manner, and a location-amplitude-based identification manner.

In some amplitude-based identification implementations, the service chip obtains an amplitude value of a digital electrical signal, and determines a primary pulse signal and a secondary pulse signal from the digital electrical signal, where the primary pulse signal is a pulse signal with a maximum amplitude value in the digital electrical signal, and the secondary pulse signal is a primary pulse signal with a non-maximum amplitude value in the digital electrical signal. In a specific example, the digital electrical signal is a signal sequence including a plurality of pulse signals that are sequentially arranged; the service chip sorts the pulse signals in the signal sequence in descending order of amplitude values; the service chip determines a pulse signal with a maximum amplitude value as a primary pulse signal; and the service chip determines a pulse signal with a non-maximum amplitude value as a secondary pulse signal.

In some location-based identification implementations, the digital electrical signal is a signal sequence including a plurality of pulse signals that are sequentially arranged; the service chip obtains a relative location of each pulse signal in the signal sequence; the service chip determines a pulse signal at a frontmost location in the signal sequence as a primary pulse signal; and the service chip determines a pulse signal at a non-frontmost location as a secondary pulse signal. In a specific example, a location of a pulse signal is represented by a coordinate of the pulse signal on a time axis. The coordinate on the time axis indicates a time point at which the pulse signal arrives at the service chip (or a time point at which the optical module obtains the pulse signal through sampling). The service chip determines a time at which each pulse signal in the signal sequence arrives at the service chip. The service chip selects a pulse signal that first arrives at the service chip from the signal sequence as a primary pulse signal. The service chip selects a pulse signal that does not first arrive at the service chip from the signal sequence as a secondary pulse signal.

In some amplitude-location-based identification implementations, the digital electrical signal is a signal sequence including a plurality of pulse signals that are sequentially arranged; the service chip determines a pulse signal that is at a frontmost location and that has a maximum amplitude value in the signal sequence as a primary pulse signal; and the service chip determines a pulse signal that is at a non-frontmost location or that has a non-maximum amplitude value as a secondary pulse signal.

When a transmit-end optical module periodically sends an optical pulse signal having a predetermined code pattern, in some implementations, the service chip determines a digital electrical signal sequence in a single period based on a received digital electrical signal sequence and a period length; and the service chip determines a pulse signal that is at a frontmost location (that first arrives at the service chip) and that has a maximum amplitude value from the digital electrical signal sequence in the single period as a primary pulse signal.

When the digital electrical signal received by the service chip includes a plurality of secondary pulse signals, in some implementations, the service chip selects a target secondary pulse signal from the plurality of secondary pulse signals, and compares a parameter of a primary pulse signal with a parameter of the target secondary pulse signal to obtain a location feature of a reflection point.

In some implementations of selecting a target secondary pulse signal through screening, the service chip selects the target secondary pulse signal from secondary pulse signals through screening based on amplitudes of the secondary pulse signals. For example, an amplitude of the target secondary pulse signal is greater than or equal to an amplitude threshold. For example, the service chip compares an amplitude of each secondary pulse signal in the received digital electrical signal with the amplitude threshold. If an amplitude of a secondary pulse signal is greater than or equal to the amplitude threshold, the service chip determines the secondary pulse signal as the target secondary pulse signal. If an amplitude of a secondary pulse signal is less than the amplitude threshold, the service chip filters out the secondary pulse signal, so that the secondary pulse signal whose amplitude is less than the amplitude threshold does not need to participate in a further comparison process. In an example, the service chip sorts the secondary pulse signals in the received digital electrical signal in descending order of amplitudes. The service chip selects a secondary pulse signal that ranks in a top preset quantity of positions from the secondary pulse signals sorted based on the amplitude values, to obtain the target secondary pulse signal. In an example, the service chip selects secondary pulse signals with top three amplitudes from the secondary pulse signals in the received digital electrical signal, to obtain the target secondary pulse signal.

Considering that a larger amplitude value of a secondary pulse signal indicates greater strength of the secondary pulse signal, it indicates that a reflected signal corresponding to the secondary pulse signal is stronger, a probability that the secondary pulse signal comes from a reflected signal of a reflection point at a port of an optical cable connector is higher, and a location feature of a reflection point extracted based on the secondary pulse signal is more accurate. This helps improve accuracy of co-cable detection.

In some implementations of selecting a target secondary pulse signal through screening, the service chip selects the target secondary pulse signal from secondary pulse signals through screening based on locations (arrival time points) of the secondary pulse signals, where a distance between a location of the target secondary pulse signal and a location of a primary pulse signal is greater than a distance threshold. In an example, the service chip determines, based on a location of each secondary pulse signal in the received digital electrical signal, a distance between the location of each secondary pulse signal and the location of the primary pulse signal; and the service chip compares the distance between each secondary pulse signal and the primary pulse signal with the distance threshold. If a distance between a secondary pulse signal and the primary pulse signal is greater than the distance threshold, the service chip determines the secondary pulse signal as the target secondary pulse signal. If a distance of a secondary pulse signal is less than the distance threshold, the service chip filters out the secondary pulse signal, so that the secondary pulse signal whose distance from the primary pulse signal is less than the distance threshold does not need to participate in a further comparison process.

Because a distance between a secondary pulse signal and the primary pulse signal represents a distance between a physical location of a reflection point that generates the secondary pulse signal and a physical location of the transmit-end device, and the distance between the secondary pulse signal and the primary pulse signal being less than the distance threshold indicates that the distance between the reflection point that generates the secondary pulse signal and the transmit-end device is very short, it is highly probable that the secondary pulse signal is not generated by a reflection point at a port of an optical cable connector, and the secondary pulse signal whose distance is less than the distance threshold is excluded from a signal comparison range through signal screening. This reduces a risk that a reflected signal that is not generated by a reflection point at a port of an optical cable connector causes an error in a location feature of a reflection point, and helps improve accuracy of co-cable detection.

For example, FIG. 18 is a diagram of a digital electrical signal sequence received by a receive-end service chip. As shown in FIG. 18, in one period, a primary pulse signal is at a frontmost location, and the primary pulse signal has a maximum amplitude. The primary pulse signal follows secondary pulse signals in sequence, and an amplitude of each secondary pulse signal is less than that of the primary pulse signal, forming signal tailing. The service chip can compare an amplitude and a location of one primary pulse signal with amplitudes and locations of three secondary pulse signals to obtain a location feature of a reflection point.

In some implementations, the service chip sends a location feature of a reflection point in a first optical fiber link to an analysis device.

In some implementations, the service chip obtains a location feature of a reflection point in a second optical fiber link, and determines, in response to the location feature of the reflection point in the first optical fiber link and the location feature of the reflection point in the second optical fiber link meeting a matching condition, that the first optical fiber link and the second optical fiber link share a same optical cable section.

In some implementations, the service chip performs, by running software, the method provided in this embodiment. For example, a memory is further disposed on the mainboard of the network device. The service chip implements the method in the foregoing embodiment by reading program code stored in the memory. The program code stored in the memory is, for example, an algorithm for comparing a parameter of a primary pulse signal with a parameter of a secondary pulse signal. In some other implementations, the service chip implements the method in the foregoing embodiment by using program code internally stored.

In still some implementations, the receive end determines a parameter of a derivative tail signal based on a received optical signal, and the receive end determines a location feature of a reflection point based on the parameter of the derivative tail signal.

In still some implementations, the receive end determines a location feature of a reflection point based on an amplitude of a derivative tail signal. For example, the receive end determines, based on an amplitude difference between the amplitude of the derivative tail signal and an amplitude of an original pulse signal (for example, a first received pulse signal), a location feature of a reflection point that generates the derivative tail signal. The amplitude of the derivative tail signal represents strength (a power) of the derivative tail signal. By comparing the difference between the amplitude of the derivative tail signal and the amplitude of the original pulse signal, an attenuation degree of a signal at the reflection point can be determined, to determine the location feature of the reflection point.

The following further describes step S491 in the method shown in FIG. 6A and FIG. 6B by using an example.

There are a plurality of implementations in which the analysis device matches a location feature of a reflection point in the first optical fiber link with a location feature of a reflection point in the second optical fiber link.

In some implementations, the analysis device determines a quantity of reflection points that are in the first optical fiber link and that have a same location feature as those in the second optical fiber link; the analysis device compares the quantity of reflection points having a same location feature with a quantity threshold; and if the quantity of reflection points having a same location feature is greater than the quantity threshold, the analysis device determines that the first optical fiber link and the second optical fiber link share a same optical cable section.

For a manner of determining reflection points having a same location feature, for example, the first optical fiber link includes a first reflection point, the second optical fiber link includes a second reflection point, a first optical signal is transmitted in the first optical fiber link, a second optical signal is transmitted in the second optical fiber link, a location feature of the first reflection point includes a distance between a secondary pulse signal that is in the first optical signal and that corresponds to the first reflection point and a primary pulse signal in the first optical signal, a location feature of the second reflection point includes a distance between a secondary pulse signal that is in the second optical signal and that corresponds to the second reflection point and a primary pulse signal in the second optical signal, and the analysis device determines, based on the distance between the secondary pulse signal corresponding to the first reflection point and the primary pulse signal in the first optical signal being the same as the distance between the secondary pulse signal corresponding to the second reflection point and the primary pulse signal in the second optical signal, that the first reflection point and the second reflection point have a same location feature. In a specific example, as shown in FIG. 1, the reflection point 1 in the first optical fiber link and the reflection point 2 in the second optical fiber link in FIG. 1 are a pair of reflection points having a same location feature, and the reflection point 3 in the first optical fiber link and the reflection point 4 in the second optical fiber link in FIG. 1 are a pair of reflection points having a same location feature.

If a reflection point in the first optical fiber link and a reflection point in the second optical fiber link have a same location feature, it indicates that the two reflection points are likely to be located in a same optical cable section. If the quantity of reflection points having a same location feature is greater than the quantity threshold, the analysis device can determine that there is a risk that the first optical fiber link and the second optical fiber link share a same optical cable section.

In some other implementations, the analysis device compares a location feature of each reflection point in the first optical fiber link with a location feature of a corresponding reflection point in the second optical fiber link, and determines, in response to the location feature of each reflection point in the first optical fiber link being the same as the location feature of the corresponding reflection point in the second optical fiber link, that the first optical fiber link and the second optical fiber link share a same optical cable section. For example, as shown in FIG. 1, the reflection point 1 in the first optical fiber link and the reflection point 2 in the second optical fiber link in FIG. 1 are a pair of reflection points at corresponding locations, and the reflection point 3 in the first optical fiber link and the reflection point 4 in the second optical fiber link in FIG. 1 are a pair of reflection points at corresponding locations. The analysis device compares a location feature of the reflection point 1 in the first optical fiber link with a location feature of the reflection point 2 in the second optical fiber link. The analysis device compares a location feature of the reflection point 3 in the first optical fiber link with a location feature of the reflection point 4 in the second optical fiber link. The analysis device determines, based on the reflection point 1 in the first optical fiber link and the reflection point 2 in the second optical fiber link having a same location feature and the reflection point 3 in the first optical fiber link and the reflection point 4 in the second optical fiber link having a same location feature, that the first optical fiber link and the second optical fiber link share a same optical cable section.

In some implementations, the analysis device determines a similarity between a location feature of a reflection point in the first optical fiber link and a location feature of a reflection point in the second optical fiber link; and if the similarity between the location feature of the reflection point in the first optical fiber link and the location feature of the reflection point in the second optical fiber link is greater than a similarity threshold, determines that the first optical fiber link and the second optical fiber link share a same optical cable section; or if the similarity between the location feature of the reflection point in the first optical fiber link and the location feature of the reflection point in the second optical fiber link is less than the similarity threshold, determines that the first optical fiber link and the second optical fiber link share a same optical cable section. For example, a reflection point in the first optical fiber link is located at a start location of the first optical fiber link, and a reflection point in the second optical fiber link is located at a middle location or an end location of the first optical fiber link. In this case, the analysis device determines that the first optical fiber link and the second optical fiber link do not share a same optical cable section because location features of the reflection points in the two optical fiber links are inconsistent.

In some embodiments, a co-cable detection apparatus is further provided. The apparatus includes:
a receiving unit, configured to receive a first optical signal from a first optical fiber link; and
a processing unit, configured to determine a location feature of a reflection point in the first optical fiber link based on the first optical signal.

The receiving unit is further configured to receive a second optical signal from a second optical fiber link.

The processing unit is further configured to determine a location feature of a reflection point in the second optical fiber link based on the second optical signal, and determine, in response to the location feature of the reflection point in the first optical fiber link and the location feature of the reflection point in the second optical fiber link meeting a matching condition, that the first optical fiber link and the second optical fiber link share a same optical cable section.

In some implementations, the processing unit is configured to: determine, in response to a quantity of reflection points that are in the first optical fiber link and that have a same location feature as those in the second optical fiber link being greater than a quantity threshold, that the first optical fiber link and the second optical fiber link share a same optical cable section; or determine, in response to a location feature of each reflection point in the first optical fiber link being the same as a location feature of a corresponding reflection point in the second optical fiber link, that the first optical fiber link and the second optical fiber link share a same optical cable section.

In some implementations, the processing unit is configured to determine a primary pulse signal in a digital electrical signal and a secondary pulse signal in the digital electrical signal, and compare a parameter of the primary pulse signal with a parameter of the secondary pulse signal to obtain a location feature of a reflection point, where the primary pulse signal is generated by performing optical-to-electrical conversion and sampling on an optical pulse signal having a predetermined code pattern, and the secondary pulse signal is generated by performing optical-to-electrical conversion and sampling on a derivative tail signal that is generated by reflecting the optical pulse signal having the predetermined code pattern at the reflection point during transmission through the first optical fiber link.

In some implementations, the location feature of the reflection point includes a distance between a location of the primary pulse signal and a location of a secondary pulse signal corresponding to the reflection point, the location of the primary pulse signal indicates a time at which the primary pulse signal arrives at a second network device, and the location of the secondary pulse signal indicates a time at which the secondary pulse signal arrives at the second network device.

The processing unit is configured to compare the location of the primary pulse signal with the location of the secondary pulse signal to obtain the distance between the location of the primary pulse signal and the location of the secondary pulse signal.

In some implementations, the location feature of the reflection point includes a distance between an amplitude of the primary pulse signal and an amplitude of a secondary pulse signal corresponding to the reflection point, the amplitude of the primary pulse signal indicates a power of the primary pulse signal, and the amplitude of the secondary pulse signal indicates a power of the secondary pulse signal. The processing unit is configured to compare the amplitude of the primary pulse signal with the amplitude of the secondary pulse signal to obtain the distance between the amplitude of the primary pulse signal and the amplitude of the secondary pulse signal.

In some implementations, the processing unit is configured to determine the primary pulse signal and the secondary pulse signal from the digital electrical signal based on an amplitude value of the digital electrical signal, where the primary pulse signal is a pulse signal with a maximum amplitude value in the digital electrical signal, and the secondary pulse signal is a primary pulse signal with a non-maximum amplitude value in the digital electrical signal.

In some implementations, the processing unit is configured to: select a target secondary pulse signal from secondary pulse signals through screening based on locations of the secondary pulse signals, where a distance between a location of the target secondary pulse signal and the location of the primary pulse signal is greater than a distance threshold; and
compare the parameter of the primary pulse signal with a parameter of the target secondary pulse signal to obtain the location feature of the reflection point.

In some implementations, an analysis device is further provided. The analysis device includes a processor, the processor is coupled to a memory, the memory stores at least one computer program instruction, and the at least one computer program instruction is loaded and executed by the processor, so that the analysis device implements the method provided by the analysis device in the embodiment in FIG. 6A and FIG. 6B. For details of the analysis device provided in the eighth aspect, refer to the embodiment in FIG. 6A and FIG. 6B. Details are not described herein again.

In some implementations, a computer-readable storage medium is further provided. The storage medium stores at least one instruction. When the instruction is run on a computer, the computer is enabled to perform the method provided in FIG. 6A and FIG. 6B, FIG. 7, FIG. 9, FIG. 11, or FIG. 12.

In some implementations, a computer program product is further provided. The computer program product includes one or more computer program instructions. When the computer program instructions are loaded and run by a computer, the computer is enabled to perform the method provided in FIG. 6A and FIG. 6B, FIG. 7, FIG. 9, FIG. 11, or FIG. 12.

In some implementations, a chip is further provided, including a memory and a processor. The memory is configured to store computer instructions, and the processor is configured to invoke the computer instructions from the memory and run the computer instructions, to perform the method provided in FIG. 6A and FIG. 6B, FIG. 7, FIG. 9, FIG. 11, or FIG. 12.

Embodiments in this specification are all described in a progressive manner. For same or similar parts in embodiments, refer to each other. Each embodiment focuses on a difference from another embodiment.

That A refers to B means that A is the same as B or that A is a simple variant of B.

In this specification and the claims in embodiments of this application, terms "first", "second", and the like are for distinguishing between different objects, but are not intended to describe a particular order of the objects, and cannot be understood as an indication or implication of relative importance. For example, a first optical module and a second optical module are used to distinguish between different optical modules, but are not used to describe a particular order of the optical modules, and it cannot be understood that the first optical module is more important than the second optical module.

Information (including but not limited to user equipment information, user personal information, and the like), data (including but not limited to data for analysis, stored data, displayed data, and the like), and a signal in embodiments of this application are all authorized by a user or fully authorized by all parties, and collection, use, and processing of related data need to comply with related laws, regulations, and standards of related countries and regions.

In embodiments of this application, unless otherwise specified, "at least one" means one or more, and "a plurality of" means two or more. For example, a plurality of optical modules are two or more optical modules.

All or some of the foregoing embodiments may be implemented by using software, hardware, firmware, or any combination thereof. When software is used for implementation, all or some of embodiments may be implemented in a form of a computer program product. The computer program product includes one or more computer instructions. When the computer program instructions are loaded and executed on a computer, all or some of the described procedures or functions according to embodiments of this application are generated. The computer may be a general-purpose computer, a special-purpose computer, a computer network, or any other programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An optical module, wherein the optical module is a first optical module, the first optical module comprises an electrical interface, an electrical-to-optical converter, and an optical interface, the electrical interface is connected to a first network device, the optical interface is connected to a second optical module through a first optical fiber link, the second optical module is further connected to a second network device, and the first optical fiber link comprises a reflection point;
the electrical-to-optical converter is configured to generate a first optical signal, wherein the first optical signal comprises an optical pulse signal having a predetermined code pattern, and the predetermined code pattern is used to describe a shape of a relationship curve between a signal power and a time; and
the optical interface is configured to send the first optical signal to the second optical module through the first optical fiber link, so that the second network device determines a location feature of the reflection point in the first optical fiber link based on an electrical signal generated by the second optical module based on the received optical signal, wherein the location feature of the reflection point is used to detect whether the first optical fiber link and a second optical fiber link share a same optical cable section.

2. The optical module according to claim 1, wherein the electrical-to-optical converter comprises a laser, and the first optical module is configured to perform pilot tone modulation on an optical signal generated by the laser, so that the laser outputs the first optical signal.

3. The optical module according to claim 2, wherein the laser is configured to generate the first optical signal based on a first bias current, wherein a modulation curve between the first bias current and an output optical power of the laser corresponds to the predetermined code pattern.

4. The optical module according to claim 3, wherein the first optical module further comprises a microcontroller unit MCU, and the MCU is configured to generate the first bias current, and input the first bias current to the laser; or
the electrical interface is further electrically connected to a signal source located outside the first optical module, and the electrical interface receives the first bias current from the signal source, and inputs the first bias current to the laser.

5. The optical module according to claim 2, wherein the electrical-to-optical converter further comprises a driver;
the driver is configured to generate a first drive electrical signal based on a first control signal, and output the first drive electrical signal to the laser, wherein a modulation curve between the first drive electrical signal and an output optical power of the laser corresponds to the predetermined code pattern; and
the laser is configured to generate the first optical signal based on the first drive electrical signal.

6. The optical module according to claim 1, wherein the first optical module further comprises an optical digital signal processor oDSP, and the oDSP is configured to generate a first electrical signal, wherein the first electrical signal comprises an electrical pulse signal having a predetermined code pattern; and
the electrical-to-optical converter is configured to perform electrical-to-optical conversion on the first electrical signal to generate the first optical signal.

7. The optical module according to claim 1, wherein the electrical interface is configured to receive a first electrical signal from the first network device, wherein the first electrical signal comprises an electrical pulse signal having a predetermined code pattern; and
the electrical-to-optical converter is configured to perform electrical-to-optical conversion on the first electrical signal to generate the first optical signal.

8. The optical module according to any one of claims 1 to 7, wherein the electrical-to-optical converter generates an optical pulse signal having a predetermined code pattern based on a predetermined time interval, to generate the first optical signal, wherein the first optical signal comprises optical pulse signals having a plurality of periods, and the optical pulse signal has the predetermined code pattern in each period.

9. The optical module according to any one of claims 1 to 8, wherein duration of one pulse in the optical pulse signal having the predetermined code pattern is less than 1 µs, and a duty cycle of the optical pulse signal having the predetermined code pattern is less than 5%.

10. The optical module according to any one of claims 1 to 9, wherein the predetermined code pattern comprises a square wave, a sine wave, or a triangular wave.

11. An optical module, wherein the optical module is a second optical module, the second optical module comprises an electrical interface, an optical-to-electrical converter, an analog-to-digital converter, and an optical interface, the electrical interface is connected to a second network device, the optical interface is connected to a first optical fiber link, the first optical fiber link is connected to a first optical module, the first optical fiber link comprises the first optical fiber link, and the first optical fiber link comprises a reflection point;
the optical interface is configured to receive a first optical signal from the first optical module through the first optical fiber link, wherein the first optical signal comprises an optical pulse signal having a predetermined code pattern, and the predetermined code pattern is a shape of a relationship curve between a signal power and a time;
the optical-to-electrical converter is configured to perform optical-to-electrical conversion on the first optical signal to obtain an analog electrical signal;
the analog-to-digital converter is configured to sample the analog electrical signal based on a predetermined sampling frequency to obtain a digital electrical signal, wherein a ratio of the predetermined sampling frequency to a signal frequency corresponding to the predetermined code pattern meets a condition; and
the electrical interface is configured to send the digital electrical signal to the second network device, so that the second network device determines a location feature of the reflection point in the first optical fiber link based on the digital electrical signal, wherein the location feature of the reflection point is used to detect whether the first optical fiber link and a second optical fiber link share a same optical cable section.

12. The optical module according to claim 11, wherein the signal frequency corresponding to the predetermined code pattern is greater than 1 MHz, and the sampling frequency is greater than 10 MHz.

13. A network device, wherein the network device is a first network device, the first network device comprises a service chip and an electrical interface, and the electrical interface is connected to the first optical module according to any one of claims 1 to 10; and
the service chip is configured to generate a first electrical signal, wherein the first electrical signal comprises an electrical pulse signal having a predetermined code pattern, and the service chip sends the first electrical signal to the first optical module through the electrical interface.

14. A network device, wherein the network device is a second network device, the second network device comprises a service chip and an electrical interface, and the electrical interface is connected to the second optical module according to claim 11 or claim 12;
the electrical interface is configured to receive a digital electrical signal from the second optical module; and
the service chip is configured to determine a location feature of the reflection point in the first optical fiber link based on the digital electrical signal, wherein the location feature of the reflection point is used to detect whether the first optical fiber link and a second optical fiber link share a same optical cable section.

15. The network device according to claim 14, wherein the service chip is configured to determine a primary pulse signal in the digital electrical signal and a secondary pulse signal in the digital electrical signal, and compare a parameter of the primary pulse signal with a parameter of the secondary pulse signal to obtain the location feature of the reflection point, wherein the primary pulse signal is generated by performing optical-to-electrical conversion and sampling on the optical pulse signal having the predetermined code pattern, and the secondary pulse signal is generated by performing optical-to-electrical conversion and sampling on a derivative tail signal that is generated by reflecting the optical pulse signal having the predetermined code pattern at the reflection point during transmission through the first optical fiber link.

16. The network device according to claim 15, wherein the location feature of the reflection point comprises a distance between a location of the primary pulse signal and a location of a secondary pulse signal corresponding to the reflection point, the location of the primary pulse signal indicates a time at which the primary pulse signal arrives at the second network device, and the location of the secondary pulse signal indicates a time at which the secondary pulse signal arrives at the second network device; and
the service chip is configured to compare the location of the primary pulse signal with the location of the secondary pulse signal to obtain the distance between the location of the primary pulse signal and the location of the secondary pulse signal.

17. The network device according to claim 15, wherein the location feature of the reflection point comprises a distance between an amplitude of the primary pulse signal and an amplitude of a secondary pulse signal corresponding to the reflection point, the amplitude of the primary pulse signal indicates a power of the primary pulse signal, and the amplitude of the secondary pulse signal indicates a power of the secondary pulse signal; and
the service chip is configured to compare the amplitude of the primary pulse signal with the amplitude of the secondary pulse signal to obtain the distance between the amplitude of the primary pulse signal and the amplitude of the secondary pulse signal.

18. The network device according to claim 15, wherein the service chip is configured to determine the primary pulse signal and the secondary pulse signal from the digital electrical signal based on an amplitude value of the digital electrical signal, wherein the primary pulse signal is a pulse signal with a maximum amplitude value in the digital electrical signal, and the secondary pulse signal is a primary pulse signal with a non-maximum amplitude value in the digital electrical signal.

19. The network device according to any one of claims 15 to 18, wherein the service chip is configured to: select a target secondary pulse signal from the secondary pulse signals through screening based on locations of the secondary pulse signals, wherein a distance between a location of the target secondary pulse signal and the location of the primary pulse signal is greater than a distance threshold; and
compare the parameter of the primary pulse signal with a parameter of the target secondary pulse signal to obtain the location feature of the reflection point.

20. The network device according to any one of claims 15 to 18, wherein the service chip is configured to: select a target secondary pulse signal from the secondary pulse signals through screening based on amplitudes of the secondary pulse signals, wherein an amplitude of the target secondary pulse signal is greater than an amplitude threshold, or the amplitude of the target secondary pulse signal ranks in a top preset quantity of positions in the secondary pulse signals; and
compare the parameter of the primary pulse signal with a parameter of the target secondary pulse signal to obtain the location feature of the reflection point.

21. The network device according to any one of claims 14 to 18, wherein the service chip is further configured to send the location feature of the reflection point in the first optical fiber link to an analysis device.

22. The network device according to any one of claims 14 to 18, wherein the service chip is further configured to obtain a location feature of the reflection point in the second optical fiber link, and determine, in response to the location feature of the reflection point in the first optical fiber link and the location feature of the reflection point in the second optical fiber link meeting a matching condition, that the first optical fiber link and the second optical fiber link share the same optical cable section.

23. A co-cable detection method, wherein the method comprises:
receiving a first optical signal from a first optical fiber link;
determining a location feature of a reflection point in the first optical fiber link based on the first optical signal;
receiving a second optical signal from a second optical fiber link;
determining a location feature of a reflection point in the second optical fiber link based on the second optical signal; and
determining, in response to the location feature of the reflection point in the first optical fiber link and the location feature of the reflection point in the second optical fiber link meeting a matching condition, that the first optical fiber link and the second optical fiber link share a same optical cable section.

24. The method according to claim 23, wherein determining, in response to the location feature of the reflection point in the first optical fiber link and the location feature of the reflection point in the second optical fiber link meeting the matching condition, that the first optical fiber link and the second optical fiber link share the same optical cable section comprises:
determining, in response to a quantity of reflection points that are in the first optical fiber link and that have a same location feature as those in the second optical fiber link being greater than a quantity threshold, that the first optical fiber link and the second optical fiber link share the same optical cable section; or
determining, in response to a location feature of each reflection point in the first optical fiber link being the same as a location feature of a corresponding reflection point in the second optical fiber link, that the first optical fiber link and the second optical fiber link share the same optical cable section.

25. A communication system, wherein the communication system comprises a first network device, a first optical module, a second network device, a second optical module, a third network device, a third optical module, a fourth network device, and a fourth optical module, wherein
the first network device is connected to the first optical module, the first optical module is connected to the second optical module through a first optical fiber link, the second optical module is connected to the second network device, the third network device is connected to the third optical module, the third optical module is connected to the fourth optical module through a second optical fiber link, and the fourth optical module is connected to the fourth network device;
the first optical module is configured to send a first optical signal to the second optical module through the first optical fiber link, wherein the first optical signal comprises an optical pulse signal having a predetermined code pattern, and the predetermined code pattern is used to describe a shape of a relationship curve between a signal power and a time;
the second optical module is configured to receive the first optical signal through the first optical fiber link, and perform optical-to-electrical conversion and sampling on the first optical signal to obtain a first digital electrical signal;
the second network device is configured to determine a location feature of a reflection point in the first optical fiber link based on the first digital electrical signal;
the third optical module is configured to send a second optical signal to the fourth optical module through the second optical fiber link, wherein the second optical signal comprises an optical pulse signal having the predetermined code pattern;
the fourth optical module is configured to receive the second optical signal through the first optical fiber link, and perform optical-to-electrical conversion and sampling on the second optical signal to obtain a second digital electrical signal; and
the fourth network device is configured to determine a location feature of a reflection point in the second optical fiber link based on the second digital electrical signal.

26. The system according to claim 25, wherein the system further comprises an analysis device, and the analysis device is separately connected to the second network device and the fourth network device;
the second network device is further configured to send the location feature of the reflection point in the first optical fiber link to the analysis device;
the fourth network device is further configured to send the location feature of the reflection point in the second optical fiber link to the analysis device; and
the analysis device is configured to determine, in response to the location feature of the reflection point in the first optical fiber link and the location feature of the reflection point in the second optical fiber link meeting a matching condition, that the first optical fiber link and the second optical fiber link share a same optical cable section.
